# EUROPÄISCHE PATENTSCHRIFT

(11) **EP 3 468 432 B1**
(45) Veröffentlichungstag und Bekanntmachung des Hinweises auf die Patenterteilung: **26.07.2023**
(21) Anmeldenummer: 17728561.6
(22) Anmeldetag: 08.06.2017
(51) Int. Cl.: A47J 43/07, A47J 43/046

(54) **AUTOMATISCHE STEUERFUNKTION FÜR SAHNESCHLAGEN**
AUTOMATIC CONTROL FUNCTION FOR WHIPPING CREAM
FONCTION DE COMMANDE AUTOMATIQUE POUR FOUETTER DE LA CRÈME

(30) Priorität: 10.06.2016 DE 102016110687
(43) Veröffentlichungstag der Anmeldung: 17.04.2019
(73) Patentinhaber: Vorwerk & Co. Interholding GmbH, 42270 Wuppertal (DE)
(72) Erfinder: YAN, Wenjie, 40476 Düsseldorf (DE); KÖNNINGS, Maximilian, 8706 Meilen (CH); RESENDE, Maria, 1500-431 Lissabon (PT)
(74) Vertreter: Bals & Vogel Patentanwälte PartGmbB
(86) Internationale Anmeldenummer: PCT/EP2017/063984
(87) Internationale Veröffentlichungsnummer: WO 2017/211963

(56) Entgegenhaltungen:
- EP-A2- 2 394 549
- DE-A1-102008 038 783
- DE-A1-102013 106 691

## Beschreibung

Die vorliegende Erfindung betrifft ein Verfahren gemäß der im Oberbegriff des Anspruchs 1 näher definierten Art. Ferner bezieht sich die Erfindung auf eine Küchenmaschine gemäß dem Oberbegriff des Anspruchs 11 sowie auf ein Computerprogrammprodukt gemäß dem Oberbegriff des Anspruchs 15.

Aus dem Stand der Technik sind Küchenmaschinen bekannt, welche zumindest teilweise automatisch Lebensmittel zubereiten können. Eine derartige Küchenmaschine ist bspw. in der Schrift DE 10 2013 106 691 A1 gezeigt. Die Druckschrift EP 2 394 549 A2 offenbart ein Verfahren zum Betreiben einer Küchenmaschine, wobei in einem Zubereitungsbetrieb mindestens eine Bearbeitungsvorrichtung der Küchenmaschine zur automatischen Zubereitung von Lebensmitteln angesteuert wird.

Eine derartige Küchenmaschine umfasst eine oder mehrere Bearbeitungsvorrichtungen, welche bspw. ein Rührwerk aufweisen. Die Bearbeitungsvorrichtung kann dabei derart angesteuert werden, dass eine selbstständige und/oder zumindest teilweise automatische Zubereitung möglich ist. Dies umfasst insbesondere auch die Abarbeitung von Rezeptschritten durch die Küchenmaschine.

Die zumindest teilweise automatische Zubereitung erfolgt dabei insbesondere gemäß einer Programmierung der Küchenmaschine, welche bspw. gemäß den Rezeptschritten oder der Bedienereinstellung unterschiedliche Ansteuerungsparameter für die Ansteuerung der Bearbeitungsvorrichtung umfasst. Auch umfasst die Programmierung der Küchenmaschine bspw. bestimmte Vorgaben, wie Ansteuerungsparameter, in Abhängigkeit von dem zuzubereitenden Lebensmittel. So erfordert bspw. die Zubereitung von Reis eine andere Rührwerksdrehzahl und zeitliche Rührdauer als die Zubereitung von Sahne. Die Art des Lebensmittels wird bspw. durch das Rezept oder durch den Bediener der Küchenmaschine vorgegeben und an der Küchenmaschine entsprechend eingestellt. In Abhängigkeit von der Art des Lebensmittels erfolgt dann die Zubereitung entsprechend einer vorgegebenen Rührdauer und/oder Rührwerksdrehzahl, welche für die Zubereitung des jeweiligen Lebensmittels optimal ist.

Allerdings ist hierbei oft ein Problem, dass die optimale Zubereitung und damit die optimalen Werte für die Ansteuerungsparameter, wie die Rührwerksdrehzahl und/oder die Rührdauer, von sehr vielen Faktoren abhängig sind und von diesen beeinflusst werden. Solche Faktoren sind bspw. die Lebensmitteleigenschaften (Menge, Fettprozent, Hersteller und dergleichen) und/oder die Umgebungsbedingungen (wie die Raumtemperatur). Um die optimalen Werte für die Ansteuerungsparameter zu bestimmen, reicht es daher oft nicht aus, in Abhängigkeit von einer eingestellten Lebensmittelart, d. h. lebensmittelabhängig, vorgespeicherte Werte für die Ansteuerungsparameter heranzuziehen. Insbesondere ist es dann oft nicht möglich, bei unterschiedlichen Voraussetzungen und Umgebungsbedingungen vergleichbare Ergebnisse bei der Zubereitung zu erhalten. Die Berücksichtigung von nur vereinzelten Faktoren ist dabei oft nicht ausreichend, wobei zudem der Kosten- und der technische Aufwand für die Sensorik hoch sind.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte und/oder vereinfachte, zumindest teilweise automatische Zubereitung von Lebensmitteln zu ermöglichen. Weiter soll insbesondere eine Zubereitung durch die Küchenmaschine für ein für die Zubereitung vorgesehenes Lebensmittel, d. h. insbesondere die Ermittlung der optimalen Ansteuerungsparameter für das jeweilige Lebensmittel, in Bezug auf den Zustand und/oder die Art des Lebensmittels verbessert werden. Insbesondere soll dabei der konstruktive Aufwand und/oder Kostenaufwand reduziert werden.

Die voranstehende Aufgabe wird gelöst durch ein Verfahren mit den Merkmalen des Anspruchs 1, durch eine Küchenmaschine mit den Merkmalen des Anspruchs 11 sowie durch ein Computerprogrammprodukt mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Küchenmaschine sowie dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zum Betreiben einer Küchenmaschine, wobei in einem Zubereitungsbetrieb mindestens eine Bearbeitungsvorrichtung der Küchenmaschine zur zumindest teilweise automatischen Zubereitung von mindestens einem und/oder verschiedener Lebensmittel angesteuert wird. Diese Ansteuerung erfolgt bspw. durch eine Steuerungsvorrichtung und/oder durch ein Steuerungssignal, welches von der Steuerungsvorrichtung und/oder von einer Verarbeitungsvorrichtung ausgegeben wird. Bevorzugt weist die Küchenmaschine eine Überwachungsvorrichtung auf, welche zumindest während des Zubereitungsbetriebs eine Ermittlung von zeitlich aufeinander folgenden Erfassungswerten an der Küchenmaschine (durch eine Erfassung) durchführt, wobei die Erfassungswerte für wenigstens einen Zubereitungsparameter der Küchenmaschine und/oder für die Zubereitung des Lebensmittels spezifisch sind. Hierbei ist insbesondere vorgesehen, dass zumindest eine Analyseinformation in Abhängigkeit von den zeitlich aufeinander folgenden Erfassungswerten bestimmt wird, und eine zeitabhängige Analyse der Analyseinformation zur Bestimmung eines für einen Zustand der Zubereitung spezifischen Analyseergebnisses durchgeführt wird. Bevorzugt umfasst dabei die zeitabhängige Analyse eine Ermittlung einer Häufigkeitsverteilung (d. h. Häufigkeitsanalyse) der Analyseinformation, welche eine Histogrammanalyse umfasst. Hierbei werden die Schritte durchgeführt, welche auch zur Bestimmung eines Histogramms der Analyseinformation notwendig sind. Vorzugsweise wird in Abhängigkeit von dem Analyseergebnis mindestens ein Steuerungssignal zur Beeinflussung des Zubereitungsbetriebs ausgegeben. Mit anderen Worten wird durch die zeitabhängige Analyse der Analyseinformation ein Analyseergebnis bestimmt, welches insbesondere Rückschlüsse über den Zustand des Lebensmittels während der Zubereitung erlaubt. Hierzu wertet die zeitabhängige Analyse bspw. mehrere, insbesondere mindestens 2 und/oder mindestens 4 und/oder mindestens 10, der ermittelten Erfassungswerte (und/oder der daraus resultierenden Werte, wie die generierten Merkmale) aus, z. B. vergleicht diese miteinander, um bevorzugt ein einziges Analyseergebnis zu bestimmen. Eine exakte Kenntnis der Faktoren wie der Lebensmitteleigenschaften und Umgebungsbedingungen ist somit nicht nötig, da insbesondere das Analyseergebnis die notwendigen Informationen bereitstellt, um die Zubereitung zu optimieren. Bevorzugt kann in Abhängigkeit von dem Analyseergebnis dann die Zubereitung gesteuert werden, d. h. der Zubereitungsbetrieb derart beeinflusst werden, dass die optimale Zubereitung für das Lebensmittel gewährleistet wird. Beispielsweise wird durch die Ausgabe des Steuerungssignals ein Ansteuerungsparameter wie die zeitliche Rührdauer beeinflusst und/oder festgelegt. Somit kann in Abhängigkeit von dem für die Zubereitung vorgesehenen (dem zuzubereitenden) Lebensmittel die optimalen Ansteuerungsparameter bestimmt werden und/oder die Zubereitung entsprechend beeinflusst werden. Das Steuerungssignal wird bspw. durch eine Verarbeitungsvorrichtung und/oder durch die Überwachungsvorrichtung und/oder durch eine Steuerungsvorrichtung und/oder durch eine Elektronik der Küchenmaschine ausgegeben. Weiter ist es bspw. vorgesehen, dass die Bestimmung der Analyseinformation und/oder die Analyse und/oder die Bestimmung des Analyseergebnisses von der Verarbeitungsvorrichtung durchgeführt, bevorzugt durch arithmetische Operationen und/oder eine Signalverarbeitung, wird.

Weiter ist es insbesondere denkbar, dass durch die zeitabhängige Analyse das Analyseergebnis bestimmt wird, welches für den Zustand der Zubereitung spezifisch ist, d. h. insbesondere für den Zustand des Lebensmittels während der Zubereitung. Hierunter werden beispielsweise Eigenschaften des Lebensmittels, wie die Konsistenz und/oder Temperatur und/oder optische Eigenschaften und/oder akustische Eigenschaften, verstanden, welche sich während der Zubereitung (d. h. während des Zubereitungsbetriebs) verändern. Die Analyseinformation und/oder die Erfassungswerte und/oder der Zubereitungsparameter ist / sind dabei vorzugsweise von einer an der Küchenmaschine ermittelbaren Information und/oder Stellgrößen und/oder Einflussgrößen und/oder Eigenschaft der Küchenmaschine und/oder physikalischen Größe abhängig, welche von dem Zustand des Lebensmittels beeinflusst wird. Vorzugsweise bezieht sich der Begriff "Erfassungswert" im Rahmen der Erfindung auf einen (beispielsweise mittels eines Sensors) erfassbaren Wert und/oder Messwert einer physikalischen Größe bzw. Messgröße, welcher insbesondere an der Küchenmaschine erfasst wird, wobei bevorzugt der Zubereitungsparameter die Messgröße ist. Insbesondere umfasst die Ermittlung der Erfassungswerte eine Messung (Erfassung) der Messgröße, wobei unter "Messung" in diesem Zusammenhang sowohl eine quantitative aber auch eine qualitative Erfassung verstanden werden kann, und diese somit nicht zwangsläufig die Festlegung einer Einheit und/oder die quantitative Aussage über die Messgröße umfassen muss. Der Erfassungswert kann bspw. lediglich ein Spannungswert und/oder Stromwert sein, wobei z. B. ein Verlauf ohne konkreten Vergleich mit einer Einheit durch die zeitabhängige Analyse analysiert wird und/oder für die Analyseinformation herangezogen wird.

Im Rahmen der Erfindung bezeichnet der Zubereitungsparameter insbesondere eine erfassbare (messbare) physikalische Größe (wie die Drehzahl des Rührwerks) und/oder Stellgröße (wie das Motorsignal) und/oder Einflussgröße (wie die Temperatur) an der Küchenmaschine, wobei der Zubereitungsparameter vorzugsweise (ausschließlich) indirekt von dem Zustand der Zubereitung beeinflusst wird, wie der Motorstrom eines Elektromotors zum Antreiben des Rührwerks. Bspw. bewirkt eine Veränderung der Konsistenz des Lebensmittels einen veränderten (Rühr-) Widerstand auf das Rührwerk und hat damit indirekt Einfluss auf den Motorstrom. Somit ist vorzugsweise der zeitliche Verlauf der Messwerte bzw. Erfassungswerte abhängig von einem Verlauf des Rührwiderstands des Rührwerks. Hierbei hat sich überraschend der Vorteil ergeben, dass eine zeitabhängige Analyse, insbesondere der zeitlich aufeinander folgenden Erfassungswerte, die wesentlichen Informationen für die Optimierung der Zubereitung, insbesondere der Ansteuerung der Bearbeitungsvorrichtung, liefern kann. Insbesondere kann anhand der zeitabhängigen Analyse der Analyseinformation in vorteilhafter Weise ein Fertigstellungszeitpunkt für das Lebensmittel bestimmt werden.

Bevorzugt ist die zeitabhängige Analyse eine Analyse von zeitlich aufeinanderfolgenden (Erfassungs-) Werten, vorzugsweise einer Zeitreihe. Besonders bevorzugt umfasst die zeitabhängige Analyse statistische Methoden zur Vorhersage (Prädiktion) der künftigen Entwicklung der Zeitreihe und/oder Erfassungswerte. Dabei bietet eine Vorhersage den Vorteil, dass trotz einer hohen Latenzzeit, d. h. einer Verzögerung zwischen dem Eintreten des Zustands der Zubereitung und dem Vorliegen des entsprechenden Analyseergebnisses, rechtzeitig das Steuerungssignal ausgegeben werden kann. Die zeitabhängige Analyse bietet damit den Vorteil, dass zuverlässig und frühzeitig ein künftiger Fertigstellungs- und/oder sonstiger gewünschter Zustand bei der Zubereitung des Lebensmittels erkennt bzw. bestimmt werden kann. Dies ermöglicht die frühzeitige Einflussnahme auf die Zubereitung, um bspw. rechtzeitig den Zubereitungsbetrieb deaktivieren zu können. Mit anderen Worten dient das Steuerungssignal bevorzugt dazu, einen Zustand der Zubereitung zu erhalten, welcher zeitlich dem Zustand der Zubereitung, für welchen das bestimmte Analyseergebnis spezifisch ist, nachfolgt. Somit kann die zeitabhängige Analyse, welche bspw. auch zeitbegrenzt und/oder echtzeitfähig durchgeführt wird, die Beeinflussung des Zubereitungsbetriebs und/oder die Bestimmung des Zustands der Zubereitung und/oder die Vorhersage des gewünschten Fertigstellungszeitpunkts vor dem zeitlichen Erreichen und/oder Überschreiten des Fertigstellungszeitpunkts durchführen und/oder initiieren.

Es ist ferner denkbar, dass die Küchenmaschine zumindest die eine und/oder mindestens zwei und/oder mindestens drei und/oder mehrere Bearbeitungsvorrichtungen aufweist, welche bevorzugt jeweils mindestens ein Bearbeitungswerkzeug umfassen, vorzugsweise zumindest ein Rührwerk und/oder mindestens ein Heizelement. Weiter kann es vorgesehen sein, dass die Bearbeitungsvorrichtung zumindest einen elektrischen Motor (Elektromotor), bevorzugt zum Betreiben des Rührwerks umfasst. Zudem kann die Bearbeitungsvorrichtung vorzugsweise mindestens einen Temperatursensor und/oder mindestens eine Waage und/oder mindestens einen Stromsensor und/oder mindestens einen Spannungssensor umfassen, wobei die jeweiligen Bearbeitungsvorrichtungen auch unterschiedlich voneinander ausgebildet sein können. Bspw. ist eine erste Bearbeitungsvorrichtung vorgesehen, welche das Rührwerk umfasst, und eine zweite Bearbeitungsvorrichtung vorgesehen, welche insbesondere das Heizelement und/oder den Temperatursensor umfasst. Ferner umfasst die Küchenmaschine vorzugsweise ein Gehäuse, welches eine Aufnahme für ein Rührgefäß aufweist. Das Rührgefäß ist bspw. durch einen Deckel verschließbar und weist insbesondere einen Handgriff auf. Insbesondere ist das zuzubereitende Lebensmittel in das Rührgefäß einfüllbar und/oder aufnehmbar. Das Rührwerk und/oder das Heizelement sind bevorzugt im Inneren des Rührgefäßes angeordnet, und können insbesondere auf das Lebensmittel im Rührgefäß einwirken. Auch kann es vorgesehen sein, dass die Küchenmaschine zumindest ein Bedienfeld aufweist, welches vorzugsweise mindestens ein Display, bevorzugt einen Touchscreen, umfasst. Das Display wird dabei bspw. als Eingabe- und/oder als Ausgabemittel für einen Bediener der Küchenmaschine eingesetzt. Auch können ggf. weitere Eingabemittel, wie ein Drehregler und/oder ein Stellschalter und/oder dergleichen vorgesehen sein. Über das Bedienfeld, insbesondere über das Display in Verbindung mit den weiteren Eingabemitteln, kann ein Bediener der Küchenmaschine bspw. Betriebsparameter, wie die Rührwerksdrehzahl und/oder die Heiztemperatur und/oder die Zeitdauer für den Rührvorgang (Rührdauer) und/oder verschiedene Programme für die Zubereitung einstellen und/oder aktivieren und/oder deaktivieren. Auch ist es denkbar, dass das Bedienfeld und/oder die Küchenmaschine derart ausgeführt ist, dass über den Touchscreen der einzustellende Betriebsparameter und/oder eine Rezeptauswahl auswählbar ist und/oder über das weitere Eingabemittel der Wert für den ausgewählten Betriebsparameter und/oder ein konkretes Rezept einstellbar / auswählbar ist. Weiter ist es insbesondere möglich, dass der Bediener über das Bedienfeld das Lebensmittel (d. h. insbesondere die Art des Lebensmittels) und/oder der Zubereitung und/oder das Rezept für die Küchenmaschine einstellen kann. Weiter kann es vorgesehen sein, dass der Bediener, insbesondere über das Bedienfeld und/oder die weiteren Eingabemittel, den Zubereitungsbetrieb der Küchenmaschine aktiveren und/oder deaktivieren kann. In dem Zubereitungsbetrieb wird bspw. das Rührwerk und/oder ein Motor zum Betreiben des Rührwerks gestartet, vorzugsweise für eine bestimmte zeitliche Rührdauer. Spätestens nach dieser vorbestimmten Rührdauer kann bspw. der Zubereitungsbetrieb deaktiviert werden, wodurch auch der Betrieb des Rührwerks und/oder des Motors beendet werden. Vorzugsweise ist bei einem aktivierten Zubereitungsbetrieb die Rührwerksdrehzahl größer als 0 und bei deaktiviertem Zubereitungsbetrieb die Rührwerksdrehzahl gleich 0. Die Deaktivierung des Zubereitungsbetriebs und/oder die Einstellung von Betriebsparametern, wie der Rührwerksdrehzahl und/oder der Dauer des Rührvorgangs, kann dabei bspw. manuell und/oder (teilweise) automatisch, bspw. programmgesteuert und/oder rezeptabhängig (bspw. in Abhängigkeit vom ausgewählten Rezept) und/oder lebensmittelabhängig (z. B. in Abhängigkeit vom Zustand des Lebensmittels), erfolgen. Dies ermöglicht somit insbesondere die zumindest teilweise automatische Zubereitung des Lebensmittels. Es ist dabei denkbar, dass der Zubereitungsparameter (und/oder der Ansteuerungsparameter) dem Betriebsparameter entspricht und/oder den Betriebsparameter umfasst, und/oder der Erfassungswert vom Betriebsparameter abhängig ist. Jedes Rezept und/oder jedes eingestellte Lebensmittel umfasst vorzugsweise mindestens ein (digital gespeichertes) Programm für die Zubereitung.

Bevorzugt umfasst die Küchenmaschine und/oder eine mobile Vorrichtung (wie ein mobiler Datenspeicher oder Rezeptchip) für die Küchenmaschine eine nicht-flüchtige Datenspeichereinheit, in welcher voreingestellte Betriebsparameter und/oder Programme und/oder Rezepte gespeichert sind, welche bspw. in Abhängigkeit von einer Eingabe des Bedieners ausgewählt werden. Diese Betriebsparameter umfassen dabei insbesondere auch Ansteuerungsparameter, bspw. die Rührwerksdrehzahl und/oder die Werte für elektrische Parameter zur Ansteuerung des Motors des Rührwerks, um eine bestimmte Rührwerksdrehzahl zu erzielen. Die Zubereitungsparameter umfassen dabei vorzugsweise zumindest teilweise die Betriebsparameter und/oder Ansteuerungsparameter und/oder weitere Parameter, welche für die Zubereitung von Relevanz sind. Insbesondere umfassen die Zubereitungsparameter Eigenschaften der Küchenmaschine und/oder der Ansteuerung und/oder physikalische Größen, welche für die Zubereitung des Lebensmittels relevant sind und/oder von einem Zustand der Zubereitung abhängig sind. So ist der Zubereitungsparameter bspw. ein Motorsignal des Motors des Rührwerks, welches von der Ansteuerung des Motors und/oder von der Drehzahl und/oder dem Drehmoment des Rührwerks abhängig ist.

Bevorzugt wird unter dem Zustand der Zubereitung im Rahmen der Erfindung der Zustand des Lebensmittels bei der Zubereitung und/oder Eigenschaften der Zubereitung verstanden, wie bspw. ein künftiger optimaler Fertigstellungszeitpunkt der Zubereitung und/oder des Lebensmittels. Bevorzugt ist damit das Analyseergebnis für den Zustand der Zubereitung spezifisch, d. h. das Analyseergebnis lässt insbesondere eine Schlussfolgerung zu, welchen Zustand das zubereitete Lebensmittel zum Zeitpunkt der Ermittlung der Messwerte hatte und/oder wie die Zubereitung zum Erzielen eines optimalen Ergebnisses beeinflusst werden kann. Bspw. kann anhand des Analyseergebnisses ein Fertigstellungszeitpunkt für die Zubereitung geschätzt werden und damit die Dauer des Rührvorgangs angepasst werden und/oder die Rührwerksdrehzahl angepasst werden. Die Drehzahl kann bspw. in einem Bereich von 10 Umdrehungen pro Minute (U/min) bis 600 U/min, vorzugsweise zwischen 40 U/min bis 500 U/min liegen und/oder variieren. Die Rührdauer ist bspw. in einem Bereich zwischen 10 Sekunden bis 1000 Sekunden, vorzugsweise 20 Sekunden bis 400 Sekunden einstellbar.

Es kann insbesondere vorgesehen sein, dass die Zubereitung in Abhängigkeit von einer Eingabe eines Bedieners der Küchenmaschine und/oder einer Programmierung der Küchenmaschine durchgeführt wird. Dabei ist es bspw. denkbar, dass der Bediener eine Einstellung und/oder Eingabe an der Küchenmaschine vornimmt, welche Art von Lebensmittel zubereitet werden soll. Dies kann bspw. auch durch die Auswahl eines bestimmten Rezeptes durch den Bediener erfolgen. Anschließend kann es vorgesehen sein, dass in Abhängigkeit von der Art des Lebensmittels ein bestimmtes Programm und/oder bestimmte Werte für Betriebsparameter und/oder Ansteuerungsparameter für die zumindest teilweise automatische Zubereitung durch die Küchenmaschine geladen und/oder eingestellt und/oder ausgelesen werden. Die Programme und/oder Werte sind dazu bspw. digital in einer nicht-flüchtigen Datenspeichereinheit, insbesondere der Küchenmaschine und/oder einer mobilen Vorrichtung gespeichert. Das Lebensmittel bzw. die Art des Lebensmittels ist dabei bspw. Sahne und/oder Reis und/oder Mehl, so dass bspw. ein erstes Lebensmittel, insbesondere Sahne, und/oder ein zweites Lebensmittel, insbesondere Reis, für die Zubereitung und/oder gemäß der Programmierung vorgesehen sein kann. In Abhängigkeit von der Art des Lebensmittels können auch unterschiedliche zeitabhängige Analysen und/oder eine unterschiedliche Parametrisierung für die zeitabhängige Analyse genutzt werden. Auch kann es vorgesehen sein, dass in Abhängigkeit von einem durch den Bediener ausgewählten Lebensmittel unterschiedliche charakteristische Verläufe der Analyseinformation und/oder des Analyseergebnisses vorgegeben und/oder auslesbar und/oder vergleichbar sind, welche für das jeweilige Lebensmittel spezifisch sind. So kann bspw. für ein erstes Lebensmittel ein erster für dieses Lebensmittel charakteristischer Verlauf der Analyseinformation bzw. des Analyseergebnisses vorgesehen und/oder auswertbar und für ein zweites Lebensmittel ein zweiter für dieses zweite Lebensmittel charakteristischer Verlauf der Analyseinformation bzw. des Analyseergebnisses vorgesehen und/oder auswertbar sein. Die Auswertung des entsprechenden charakteristischen Verlaufs, z. B. durch Vergleich des charakteristischen Verlaufs mit dem ermittelten Verlauf der Messwerte und/oder mit dem Analyseergebnis, ermöglicht dann einen Rückschluss auf den Zustand des jeweiligen Lebensmittels, sodass bspw. in Abhängigkeit hiervon das Steuerungssignal ausgegeben wird. Bspw. erfolgt bei Sahne die Beeinflussung, insbesondere Deaktivierung, des Zubereitungsbetriebs dann, wenn durch die zeitabhängige Analyse und/oder anhand des Analyseergebnisses der zeitabhängigen Analyse ein steigender Verlauf eines Motorsignals des Motors des Rührwerks festgestellt wird. Bevorzugt erfolgt bei Reis die Beeinflussung, insbesondere Deaktivierung, des Zubereitungsbetriebs dann, wenn durch die zeitabhängige Analyse und/oder anhand des Analyseergebnisses der zeitabhängigen Analyse ein abfallender Verlauf des Motorsignals detektiert wird. Dies hat den Vorteil, dass flexibel durch die zeitabhängige Analyse unterschiedliche Lebensmittel optimal zubereitet werden können.

Vorteilhafterweise kann im Rahmen der Erfindung vorgesehen sein, dass zumindest einer der nachfolgenden Schritte durchgeführt wird, vorzugsweise nacheinander oder in beliebiger Reihenfolge:
a) Filtern der ermittelten Erfassungswerte, um eine Glättung (des Verlaufs der ermittelten Erfassungswerte) zu erzielen, bevorzugt durch einen Tiefpassfilter,
b) Generieren von wenigstens einem Merkmal anhand der, insbesondere gefilterten, (ermittelten) Erfassungswerte, wobei vorzugsweise eine Merkmalsauswertung des wenigstens einen generierten Merkmals durchgeführt wird,
c) Bestimmen der Analyseinformation anhand der generierten Merkmale und/oder anhand der, insbesondere gefilterten, (ermittelten) Erfassungswerte,
d) Durchführen der zeitabhängigen Analyse der Analyseinformation, sodass in Abhängigkeit von einem zeitlichen Verlauf der (ermittelten und/oder gefilterten und/oder ungefilterten) Erfassungswerte das Analyseergebnis bestimmt wird,
e) Bestimmen eines positiven oder negativen Entscheidungsergebnisses in Abhängigkeit von dem Analyseergebnis, wobei bevorzugt das positive Entscheidungsergebnis nur dann bestimmt wird, wenn das Analyseergebnis einen zukünftigen bestimmten Zustand der Zubereitung indiziert,
f) Ausgeben des Steuerungssignals, wenn das bestimmte Entscheidungsergebnis positiv ist und/oder der zukünftig bestimmte Zustand der Zubereitung, insbesondere ein Fertigstellungszeitpunkt des Lebensmittels, indiziert wird.

Insbesondere ist es dabei möglich, dass zur Filterung der ermittelten Erfassungswerte, insbesondere eines Erfassungswertverlaufs der zeitlich aufeinander folgenden Erfassungswerte, zumindest eine der folgenden Filtermethoden einzeln oder in Kombination (direkt oder indirekt) an den ermittelten Erfassungswerten (insbesondere Messwerten) durchgeführt werden:
- Medianfilter
- Gleitender Mittelwert
- Tiefpass erster und/oder zweiter und/oder mindestens vierter Ordnung.

Bevorzugt umfasst das Filtern gemäß Schritt a) und/oder das Generieren des Merkmals gemäß Schritt b) und/oder das Bestimmen der Analyseinformation gemäß Schritt c) und/oder die zeitabhängige Analyse gemäß Schritt d) eine (numerische) Bestimmung einer Differenz und/oder eines Gradienten und/oder einen Vergleich von (z. B. benachbarten) gefilterten und/oder ungefilterten ermittelten Erfassungswerten. Es ist dabei denkbar, dass die Filterung und/oder das Bestimmen der Analyseinformation und/oder das Generieren der Merkmale anhand des zeitlichen Verlaufs der Erfassungswerte, d. h. anhand bspw. mindestens 2 und/oder mindestens 4 und/oder mindestens 5 und/oder mindestens 10 und/oder mindestens 100 (benachbarte, ermittelte) Erfassungswerten, erfolgt. Durch die zeitabhängige Analyse wird bevorzugt der zeitliche Verlauf ausgewertet, welcher bspw. Erfassungswerte umfassen kann, die in einem Zeitintervall über mindestens 1 s und/oder mindestens 2 s und/oder mindestens 5 s und/oder mindestens 10 s (durch die Erfassung) ermittelt wurden. Insbesondere können die Schritte a) bis f) zeitlich aufeinanderfolgend oder in beliebiger Reihenfolge und/oder wiederholt durchgeführt werden. Zumindest einer der Schritte a) bis f) und/oder die Filterung können dabei bspw. software- und/oder computerimplementiert und/oder elektronisch und/oder durch eine elektrische, insbesondere integrierte, Schaltung durchgeführt werden. Insbesondere kann es vorgesehen sein, dass für die Filterung und/oder zeitabhängige Analyse digitale und/oder diskrete Erfassungswerte ausgewertet werden. Alternativ oder zusätzlich kann es vorgesehen sein, dass die zeitabhängige Analyse und/oder zumindest einer der Schritte a) bis f) wiederholt und/oder zyklisch, insbesondere über den gesamten Zubereitungsvorgang, durchgeführt werden, um jeweils das Analyseergebnis wiederholt bzw. zyklisch zu bestimmen. Insbesondere kann es vorgesehen sein, dass die zeitabhängige Analyse und/oder zumindest einer der Schritte a) bis f) zumindest einmal pro Sekunde und/oder zumindest zehnmal pro Sekunde und/oder zumindest einhundertmal pro Sekunde während des Zubereitungsbetriebs, d. h. während der Zubereitung, durchgeführt werden. Weiter ist es bspw. vorgesehen, dass zumindest einer der Schritte a) bis f) zumindest teilweise von einer Verarbeitungsvorrichtung durchgeführt werden, bevorzugt durch arithmetische Operationen und/oder eine Signalverarbeitung. Diese Schritte gewährleisten dabei, dass zuverlässig die Zubereitung des Lebensmittels beeinflusst werden kann, um optimale Zubereitungsergebnisse zu erzielen.

Des Weiteren kann es vorgesehen sein, dass das Generieren des wenigstens einen Merkmals zumindest eine Filtermethode und/oder eine Konsistenzprüfung der Erfassungswerte und/oder Merkmale umfasst. Für die Konsistenzprüfung können insbesondere Schwellenwerte und/oder (weitere) Häufigkeitsanalysen durchgeführt werden. Weiter ist es denkbar, dass die zeitabhängige Analyse, insbesondere die Ermittlung der Häufigkeitsverteilung, anhand des ermittelten und/oder gefilterten Erfassungswertes und/oder anhand der generierten Merkmale durchgeführt wird. Bevorzugt indiziert dabei das Analyseergebnis einen zukünftigen bestimmten Zustand der Zubereitung, bspw. einen Fertigstellungszeitpunkt, an welchem für ein optimales Zubereitungsergebnis der Zubereitungsbetrieb deaktiviert werden muss. Dies hat den Vorteil, dass durch die zeitabhängige Analyse rechtzeitig der Zeitpunkt bestimmt werden kann, an welchem die Zubereitung optimal beendet werden muss.

Weiter ist es denkbar, dass zumindest ein Schwellenwert, insbesondere bei zumindest einem der Schritte a) bis f), insbesondere zur Plausibilisierung des Analyseergebnisses, ausgewertet wird, wobei bevorzugt wenigstens ein Vergleichswert, wie mindestens ein ermittelten und/oder gefilterte Erfassungswert und/oder mindestens ein generiertes Merkmal und/oder das Analyseergebnis und/oder eine zeitliche Rührdauer, mit dem Schwellenwert vergleichen wird. Der Schwellenwert kann einen oberen und einen unteren Schwellenwert umfassen, d. h. hierdurch definierten Schwellenwertbereich. Beispielweise kann vorgesehen sein, dass nur dann ein positives Entscheidungsergebnis bestimmt wird und/oder nur dann ein Steuerungssignal zur Deaktivierung des Zubereitungsbetriebs ausgegeben wird, wenn der Vergleichswert kleiner als der obere Schwellenwert und/oder größer als der untere Schwellenwert ist. Optional können auch ein erster und mindestens ein zweiter Schwellenwert vorgesehen sein. Mit anderen Worten wird bspw. eine Entscheidungsdurchführung, d. h. die Bestimmung des Entscheidungsergebnisses, nur dann durchgeführt und/oder nur dann ein positives Entscheidungsergebnis bestimmt und/oder berücksichtigt, wenn der Erfassungswert und/oder das generierte Merkmal geringer als ein oberer erster Schwellenwert und/oder größer als ein unterer erster Schwellenwert ist. Bevorzugt wird (als zusätzliche Bedingung) die Entscheidungsdurchführung nur dann durchgeführt und/oder nur dann ein positives Entscheidungsergebnis bestimmt und/oder berücksichtigt, wenn die Rührdauer geringer als ein oberer zweiter Schwellenwert und/oder größer als ein unterer zweiter Schwellenwert ist. Hierdurch erfolgt somit eine Begrenzung des Zeitabschnitts für die Entscheidungsdurchführung durch den zweiten Schwellenwert, wobei bspw. die Schwellenwerte empirisch definiert und/oder lebensmittelabhängig sind (d. h. bspw. in Abhängigkeit von einem durch den Bediener ausgewählten und/oder eingestellten Lebensmittel festgelegt werden). Die Schwellenwerte sind z. B. in einer nicht-flüchtigen Datenspeichereinheit, wie einem ROM (Read Only Memory) oder Flash-Speicher, digital persistent gespeichert, und können für ein entsprechendes Lebensmittel ausgelesen werden. Die Rührdauer kann bspw. dadurch ermittelt werden, dass bei Aktivierung des Zubereitungsbetriebs und/oder Erhöhung der Rührwerksdrehzahl ein (elektronischer) Timer gestartet und/oder bei Ermittlung der Erfassungswerte und/oder bei mindestens einem der Schritte a) bis f) ausgelesen wird. Es kann somit zuverlässig eine Plausibilisierung des Analyseergebnisses erfolgen. Der erste und/oder zweite und/oder obere und/oder untere Schwellenwert kann dabei bspw. in einem Bereich zwischen 1 Sekunde und 5000 Sekunden, insbesondere 10 Sekunden bis 1000 Sekunden, vorzugsweise 20 Sekunden bis 400 Sekunden liegen. Die Schwellenwerte können vorzugsweise derart empirisch definiert sein, dass der (untere) Schwellenwert und/oder ein (unterer) erster und/oder ein (unterer) zweiter Schwellenwert den bestimmten Wert bzw. die Rührdauer angibt, an welchem (empirisch festgelegt) frühestens der gewünschte Zustand der Zubereitung (zum Beispiel die gewünschte Konsistenz des Lebensmittels) auftritt. Weiter können die Schwellenwerte bevorzugt derart empirisch definiert sein, dass der (obere) Schwellenwert und/oder ein (oberer) erster und/oder ein (oberer) zweiter Schwellenwert den bestimmten Wert bzw. die Rührdauer angibt, an welchem (empirisch festgelegt) spätestens der gewünschte Zustand der Zubereitung (zum Beispiel die gewünschte Konsistenz des Lebensmittels) auftritt. Neben den Schwellenwerten können zur Plausibilisierung insbesondere auch weitere ermittelte Werte, wie Temperaturwerte und/oder Gewicht des Lebensmittels, ausgewertet werden. Insbesondere wird spätestens bei einer Entscheidungsdurchführung die Plausibilisierung durchgeführt und/oder ein positives Entscheidungsergebnis nur dann ausgegeben, wenn die Plausibilisierung positiv ist, d. h. die durch die Schwellenwerte vorgegebenen Grenzwerte eingehalten werden.

Es kann von Vorteil sein, wenn im Rahmen der Erfindung die zeitabhängige Analyse eine Zeitreihenanalyse, vorzugsweise eine (statistische) Auswertung der Häufigkeitsverteilung, umfasst, wobei hierzu insbesondere die Analyseinformation und/oder die ermittelten Erfassungswerte und/oder die Häufigkeitsverteilung zeitlich gepuffert werden, wobei vorzugsweise die zeitabhängige Analyse und/oder die Zeitreihenanalyse echtzeitfähig durchgeführt wird. Der Ausdruck "echtzeitfähig" bezieht sich vorzugsweise darauf, dass das Analyseergebnis spätestens innerhalb einer vordefinierten Maximalzeitdauer durch die zeitabhängige Analyse bestimmt wird. Es ist somit vorzugsweise eine sogenannte "weiche" oder alternativ auch "feste" Echtzeitanforderung im Zubereitungsbetrieb vorgesehen, um den Zubereitungsbetrieb rechtzeitig beeinflussen zu können. Gemäß der weichen Echtzeitanforderung wird das Analyseergebnis nur dann weiter verarbeitet bzw. ist das Entscheidungsergebnis nur dann positiv, wenn die vordefinierte Maximalzeitdauer eingehalten und/oder unterschritten wird. Um eine besonders schnelle Verarbeitung zu gewährleisten, ist vorzugsweise eine zeitliche Pufferung vorgesehen, insbesondere durch einen schnellen Cache-Speicher. Die Zeitreihenanalyse umfasst bspw. die Durchführung einer Frequenzanalyse und/oder einer Autokorrelationsfunktion und/oder einer Inferenzstatistische Analyse und/oder eine Trendanalyse und/oder eine Analyse einer Differenz bzw. Steigung des zeitlichen Erfassungswert-Verlaufs.

Bevorzugt wird bei der zeitabhängigen Analyse und/oder bei der Ermittlung der Häufigkeitsverteilung (Häufigkeitsanalyse) eine Auswertung von Analysewerten der Analyseinformation durchgeführt. Bevorzugt umfassen dabei die Analysewerte der Analyseinformation wenigstens einen der folgenden Werte:
- der gefilterter und/oder ungefilterter Erfassungswert,
- der zeitliche Verlauf dieser Erfassungswerte über ein bestimmtes Zeitintervall,
- das generierte Merkmal,
- eine Differenz von zeitlich benachbarten Erfassungswerten, insbesondere der gefilterten und/oder ungefilterten Erfassungswerte.

Weiter kann vorzugsweise bei der zeitabhängigen Analyse und/oder zur Auswertung und/oder Ermittlung der Häufigkeitsverteilung der Analyseinformation, d. h. insbesondere der Analysewerte, zumindest einer der nachfolgenden Schritte, insbesondere nacheinander oder in beliebiger Reihenfolge, durchgeführt werden:
- Einteilen der Analysewerte in Klassen, wobei die Klassen jeweils Wertebereiche, insbesondere eine vordefinierte konstante oder variable Wertbereich-Breite, aufweisen,
- Vergleichen der Analysewerte mit den Wertebereichen der einzelnen Klassen,
- Zuordnen der Analysewerte (insbesondere in Abhängigkeit von dem Vergleich) zu den jeweils entsprechenden Klassen, wobei vorzugsweise jeder Analysewert z. B. der Klasse zugeordnet wird, in deren Wertebereich der Analysewert liegt,
- Bestimmen der Häufigkeit und/oder Häufigkeitsdichte, insbesondere der Zuordnungen pro Klasse, d. h. insbesondere der Häufigkeit des Auftretens von Analysewerten, welche einem bestimmten Wertebereich (bzw. einer bestimmten Klasse) zugeordnet sind, wobei bevorzugt die Bestimmung der Häufigkeit für jede der Klassen durchgeführt wird,
- Ermitteln der Häufigkeitsverteilung über die Klassen (anhand der bestimmten Häufigkeiten und/oder den Klassen zugeordneten Analysewerten),
- Bestimmen eines charakteristischen Wertes der Häufigkeitsverteilung, insbesondere eines Schwerpunktes und/oder Maximums der Häufigkeitsverteilung,
- Bestimmen eines (zeitlichen) Verlaufs des charakteristischen Wertes, vorzugsweise des Schwerpunktes.

Insbesondere werden diese Schritte zumindest teilweise zyklisch während des Zubereitungsbetriebs wiederholt, so dass ein Verlauf der bestimmten Häufigkeit und/oder der Häufigkeitsdichte und/oder des charakteristischen Wert bzw. Schwerpunktes ermittelbar ist. Bevorzugt kann für zeitabhängige Analyse und/oder die Entscheidungsdurchführung eine Auswertung des zeitlichen Verlaufs des charakteristischen Wertes, insbesondere Schwerpunktes, (von mehreren Häufigkeitsverteilungen) durchgeführt werden. Der Verlauf des charakteristischen Wertes ist dabei besonders bevorzugt abhängig von dem Zustand der Zubereitung und/oder des Lebensmittels bei der Zubereitung, und kann daher zur Optimierung der Zubereitung dienen. Der charakteristische Wert bzw. Schwerpunkt ist bspw. davon abhängig, welche der Klassen die maximale Häufigkeit bzw. Häufigkeitsdichte bzw. die meisten Analysewerte umfasst. Bevorzugt wird das Analyseergebnis in Abhängigkeit von dem Verlauf des charakteristischen Wertes bestimmt. Hierdurch wird der Vorteil erzielt, dass die Zubereitung optimal beeinflusst werden kann, und insbesondere ein optimaler Fertigstellungszeitpunkt, bspw. für die Zubereitung von Schlagsahne bestimmt werden kann. Die Auswertung des zeitlichen Verlaufs des charakteristischen Wertes, insbesondere Schwerpunktes, der Häufigkeitsverteilung kann bspw. dadurch erfolgen, dass der zeitliche Verlauf mit einem zeitlichen Verlaufsmuster verglichen wird und/oder ein zeitliches Verlaufsmuster des Verlaufs detektiert wird. Das zeitliche Verlaufsmuster umfasst beispielsweise einen charakteristischen zeitlichen Verlauf des charakteristischen Wertes (z. B. des Schwerpunktes) hin zu höheren Klassen mit höheren Wertebereichen, und insbesondere anschließend zurück zu kleineren Klassen mit geringeren Wertebereichen, und/oder umgekehrt. Es kann bspw. ein erstes Verlaufsmuster für ein erstes Lebensmittel, wie Schlagsahne, und ein zweites Verlaufsmuster für ein zweites Lebensmittel, wie Reis oder Nudeln, vorgespeichert und/oder in Abhängigkeit von dem eingestellten Lebensmittel ausgewählt werden.

Es kann optional möglich sein, dass die zeitabhängige Analyse die Ermittlung der Häufigkeitsverteilung, insbesondere anhand der ermittelten Erfassungswerte und/oder eines generierten Merkmals, durchführt, um einen Trend eines zeitlichen Verlaufs der Erfassungswerte zu bestimmen, welcher einen zukünftigen bestimmten Zustand der Zubereitung indiziert. Alternativ oder zusätzlich kann es vorgesehen sein, dass die zeitabhängige Analyse eine Differenzbildung von zeitlich benachbarten Erfassungswerten und/oder Merkmalen umfasst. Zudem ist es insbesondere denkbar, dass durch die zeitabhängige Analyse bestimmte Muster in der Häufigkeitsverteilung und/oder der Analyseinformation erkannt werden, wobei das jeweilige Muster insbesondere von der Art des Lebensmittels und/oder der Zubereitung abhängig ist. Insbesondere hat die Nutzung der zeitabhängigen Analyse den Vorteil, dass wichtige Zeitpunkte und/oder Tendenzen bei der Zubereitung des Lebensmittels frühzeitig erkannt werden können.

Ein weiterer Vorteil kann im Rahmen der Erfindung erzielt werden, wenn durch die zeitabhängige Analyse die Analyseinformation derart zeitabhängig ausgewertet wird, dass mindestens ein (erster) Wert der Analyseinformation mit mindestens einem zweiten Wert und/oder mit allen weiteren Werten und/oder mit einer Vergleichsvorgabe (der Analyseinformation), insbesondere einem zeitlichen Verlaufsmuster, verglichen wird, wobei die Werte aus wenigstens einer der folgenden Daten ermittelt werden:
- mindestens einem gefilterten Erfassungswert,
- dem mindestens einem ungefilterten bzw. ermittelten Erfassungswert,
- mindestens einem aus den Erfassungswerten generierte Merkmal.

Vorzugsweise kann auch ein Gradient der Erfassungswerte bzw. des Erfassungswertverlaufs und/oder Mittelwerte und/oder dergleichen durch die zeitabhängige Analyse ausgewertet werden. Bevorzugt entspricht dabei der (erste und/oder zweite und/oder weitere) Wert der Analyseinformation einem Analysewert für die Ermittlung der Häufigkeitsverteilung. Die Vergleichsvorgabe umfasst besonders bevorzugt ein vorgegebenes Muster, insbesondere ein zeitliches Verlaufsmuster, und/oder einen vorgegebenen charakteristischer Verlauf der Analyseinformation und/oder Häufigkeitsverteilung (insbesondere eines charakteristischen Wertes bzw. Schwerpunktes der Häufigkeitsverteilung) und/oder eine in einer nicht-flüchtigen Datenspeichereinheit vorgespeicherte Vorgabe und/oder dergleichen. Die Vergleichsvorgabe wird bspw. in Abhängigkeit von einem ausgewählten (eingestellten) Lebensmittel ausgewählt. Optional umfasst die Vergleichsvorgabe Referenzwerte für ein Histogramm und/oder lebensmittelabhängige und (bzw. zubereitungsabhängige) Muster, insbesondere ein zeitliches Verlaufsmuster, und/oder Vergleichswerte. Die zeitabhängige Analyse wertet bevorzugt die Analyseinformationen, d. h. die gefilterten Erfassungswerte und/oder ungefilterten Erfassungswerte und/oder generierten Merkmale, aus, wobei hierzu bspw. ein zeitlicher Verlauf der Erfassungswerte und/oder generierten Merkmale bspw. über eine bestimmte Erfassungszeitdauer ausgewertet werden und/oder mit dem Muster vergleichen werden. Insbesondere die Filterung der ungefilterten Erfassungswerte ergibt dabei die gefilterten Erfassungswerte. Die zeitabhängige Analyse ermöglicht dabei, dass zuverlässig ein Analyseergebnis bestimmt werden kann, welches bspw. eine zukünftige Eigenschaft und/oder Konsistenz des zubereiteten Lebensmittels indiziert.

In einer weiteren Möglichkeit kann vorgesehen sein, dass ein Generieren eines Merkmals anhand der ermittelten Erfassungswerte erfolgt, insbesondere durch stochastische Methoden und/oder zeitabhängigen Berechnungen.

Das Generieren des Merkmals umfasst dabei bspw. die Berechnung einer zeitlichen Differenz und/oder einer Varianz und/oder zumindest eines lokalen Maximums und/oder eines Trends (in Bezug auf einen Abfall und/oder einen Anstieg) der Erfassungswerte und/oder eines Gradienten der Erfassungswerte und/oder von Mittelwerten. Hierdurch ist eine zuverlässige und aussagekräftige Bestimmung des Analyseergebnisses möglich. Weiter kann es vorgesehen sein, dass bei der zeitabhängigen Analyse und/oder der Generierung von Merkmalen und/oder der Filterung und/oder der Entscheidungsdurchführung ein Timer bzw. eine Zeit bzw. ein Takt elektronisch ausgelesen wird, um bspw. die Rührdauer zu ermitteln und/oder einen Vergleich mit einer Maximalzeitdauer durchzuführen.

Vorteilhaft ist es darüber hinaus, wenn im Rahmen der Erfindung die Erfassungswerte durch die Erfassung des zumindest einen Zubereitungsparameters der Küchenmaschine ermittelt werden, wobei der Zubereitungsparameter wenigstens einen der folgenden Parameter umfasst:
- eine Messgröße, welche von einer Konsistenz des zubereiteten Lebensmittels und/oder von einem Rührwiderstand eines Rührwerks der Küchenmaschine, insbesondere im Zubereitungsbetrieb, abhängig ist,
- eine Drehzahl der Bearbeitungsvorrichtung, insbesondere eines Rührwerks,
- ein Parameter eines Antriebs, insbesondere eines Motors des Antriebs, insbesondere ein Motorsignal,
- ein Motorsignal, insbesondere ein Motorstrom, welches bevorzugt von einem Drehmoment des Rührwerks und/oder einem Rührwiderstand abhängig ist,
- eine Temperatur, welche insbesondere an einem zubereiteten Lebensmittel in der Küchenmaschine erfasst wird,
- ein messbarer Parameter am zubereiteten Lebensmittel, welcher insbesondere zur Zubereitung von Schlagsahne dient und/oder von einem Rührwiderstand abhängig ist.

Die Messung und/oder Ermittlung der Erfassungswerte erfolgt dabei bspw. kontinuierlich oder zeitdiskret, wobei insbesondere der Zubereitungsparameter die Messgröße bildet. Insbesondere ist es denkbar, dass die Zubereitungsparameter den Ansteuerungsparametern bzw. Betriebsparametern zumindest teilweise entsprechen. Der Motor ist dabei bspw. als Elektromotor ausgeführt. Bevorzugt erfolgt die Ansteuerung der zumindest einen Bearbeitungsvorrichtung der Küchenmaschine während des Zubereitungsbetriebs durch eine Beeinflussung der Zubereitungsparameter und/oder Ansteuerungsparameter. So kann bspw. in Abhängigkeit von einem eingestellten Lebensmittel (bspw. einer eingestellten Art des Lebensmittels) und/oder Zubereitung bei Aktivierung des Zubereitungsbetriebs die Drehzahl und/oder der Motorstrom derart angesteuert werden, dass der Zustand der Zubereitung verändert wird. Bspw. kann bei der Zubereitung von Schlagsahne durch die Küchenmaschine der Zubereitungsparameter Temperatur und/oder Gewicht und/oder das Motorsignal erfasst werden und/oder während des Zubereitungsbetriebs (d. h. während des Schlagens der Sahne) kontinuierlich oder zeitdiskret überwacht werden. Dabei kann bspw. durch die Entwicklung und/oder zeitabhängige Analyse der Analyseinformation (welche insbesondere abhängig ist von dem Motorsignal) der Zeitpunkt frühzeitig vorhergesagt werden, an welchem die Sahne die optimale Konsistenz erreicht hat. Es ist insbesondere das Motorsignal während des Zubereitungsbetriebs abhängig von der Konsistenz des zubereiteten Lebensmittels. Insbesondere ist für die Berechnung des Analyseergebnisses eine Maximalzeitdauer vorgesehen, welche bspw. maximal 1 Sekunde oder maximal 5 Sekunden oder maximal 10 Sekunden beträgt. Somit kann rechtzeitig der Fertigstellungszeitpunkt ermittelt werden, bevor bspw. die Sahne den optimalen Zustand überschreitet.

Vorzugsweise kann vorgesehen sein, dass die Erfassung zur Ermittlung der Erfassungswerte, insbesondere als oder durch Erfassung und/oder Messung, an einem elektrischen Bauteil der Küchenmaschine, insbesondere an einem Antrieb der Bearbeitungsvorrichtung, durchgeführt wird und/oder die Erfassungswerte für elektrische Parameter der Küchenmaschine, insbesondere für ein Motorsignal des Antriebs, ermittelt werden. Das Motorsignal kann dabei bspw. der Motorstrom und/oder die Motorspannung und/oder die Drehzahl des Motors und/oder die Geschwindigkeit des Motors und/das das Drehmoment des Motors (d. h. des Elektromotors) umfassen. Somit ist eine zuverlässige Bestimmung des Zustands der Zubereitung möglich.

Ein weiterer Vorteil kann im Rahmen der Erfindung erzielt werden, wenn eine Plausibilisierung, insbesondere anhand von mindestens einem empirisch ermittelten Schwellenwert, insbesondere zum Bestimmen des Entscheidungsergebnisses, erfolgt, wobei bevorzugt der Schwellenwert in Abhängigkeit von einem zur Zubereitung vorgesehenen Lebensmittel, insbesondere automatisch, ausgewählt wird. Es können dabei insbesondere erste und zweite Schwellenwerte und/oder obere und untere Schwellenwerte vorgesehen sein. Insbesondere kann es vorgesehen sein, dass die Beeinflussung des Zubereitungsbetriebs unterdrückt wird, wenn bei dem Zeitpunkt des Vorliegens des Analyseergebnisses die Dauer des aktivierten Zubereitungsbetriebs kürzer ist als der (vordefinierte, z. B. oberen zweiten) Schwellenwert oder viel kürzer ist als bei einem normalen Vorgang. Hierzu wird insbesondere bei dem Aktivieren des Zubereitungsbetriebs ein (elektronischer) Timer gestartet, um die Dauer des aktivierten Zubereitungsbetriebs und/oder der Zubereitung zu ermitteln. Damit kann vermieden werden, dass bei einem falschen Ergebnis die Zubereitung zu früh beendet wird.

Ferner kann im Rahmen der Erfindung vorgesehen sein, dass ein Trend und/oder eine Prädiktion der ermittelten Erfassungswerte und/oder Merkmale, insbesondere eines generierten Merkmals, und/oder der Häufigkeitsverteilung ermittelt wird, vorzugsweise bei einer Merkmalsauswertung des Merkmals und/oder bei der zeitabhängigen Analyse. Hierzu kann bspw. auch eine Regressionsanalyse, insbesondere eine lineare Regression, und/oder eine Varianzanalyse und/oder zumindest ein (stochastisches) Trendmodell Verwendung finden. Der Trend umfasst dabei bevorzugt, bspw. in Abhängigkeit von der Art des Lebensmittels und/oder der Zubereitung, einen abfallenden und/oder einen ansteigenden Trend der Erfassungswerte und/oder der generierten Merkmale. Die Prädiktion umfasst insbesondere Methoden zur Vorhersage des weiteren zeitlichen Verlaufs der Häufigkeitsverteilung, insbesondere eines charakteristischen Wertes, z. B. Schwerpunktes, der Häufigkeitsverteilung, und/oder der Erfassungswerte und/oder der Merkmale, wobei hierbei insbesondere eine lineare Prädiktion und/oder eine adaptive Prädiktion hierzu Verwendung findet. Anschließend kann dieser vorhergesagte Verlauf bspw. mit einer Vergleichsvorgabe, insbesondere mit einem Muster, verglichen werden. Hierdurch kann der Vorteil erzielt werden, dass besonders zuverlässig ein Analyseergebnis bestimmt werden kann, welches den Zustand der Zubereitung indiziert.

Von weiterem Vorteil kann vorgesehen sein, dass das Entscheidungsergebnis nur dann positiv bestimmt wird, wenn ein vorgegebenes zeitliches Verlaufsmuster detektiert wird, insbesondere ein andauernder Anstieg oder Abfall, vorzugsweise der Erfassungswerte und/oder mindestens eines charakteristischen Wertes der Häufigkeitsverteilung, insbesondere (ein zeitlicher Verlauf) eines Schwerpunktes der Häufigkeitsverteilung. Alternativ oder zusätzlich kann vorgesehen sein, dass die zeitabhängige Analyse nur dann durchgeführt wird, wenn (insbesondere bei einer Merkmalsauswertung) das vorgegebene zeitliche Verlaufsmuster detektiert wird, bevorzugt ein Trend wie der andauernde Anstieg und/oder Abfall. Der Anstieg und/oder Abfall bezieht sich dabei besonders bevorzugt auf den Verlauf und/oder die Differenz der Erfassungswerte und/oder generierten Merkmale. Vorzugsweise wird das Merkmal dadurch generiert, dass (ggf. unter anderem) die Differenz zwischen benachbarten ermittelten und/oder gefilterten Erfassungswerten gebildet wird. Weiter kann das generierte Merkmal auch einen Langzeitsteigungsverlauf der Erfassungswerte umfassen. Die Differenz zwischen benachbarten Erfassungswerten wird dabei vorzugsweise dadurch ermittelt, dass (zeitlich) benachbarte Erfassungswerte miteinander nummerisch verglichen werden. Für die zeitabhängige Analyse und/oder eine Filterung der ermittelten Erfassungswerte und/oder für ein Generieren von wenigstens einem Merkmal kann bspw. eine (elektronische) Verarbeitungsvorrichtung der Küchenmaschine genutzt werden, welche die zeitabhängige Analyse und/oder die Filterung und/oder die Generierung der Merkmale zumindest teilweise nummerisch durchführt. Bspw. umfasst die Merkmalsauswertung dabei die Ermittlung der Häufigkeit und/oder die Prüfung von Bedingungen für bestimmte Merkmale, insbesondere für bestimmte Zeitabschnitte, z. B. eines andauernden Anstiegs oder Abfalls. Für die Prüfung der Bedingungen können bspw. auch Schwellenwerte zum Einsatz kommen.

Ferner ist es denkbar, dass das vorgegebene zeitliche Verlaufsmuster in Abhängigkeit von einem zur Zubereitung vorgesehenen Lebensmittel, insbesondere automatisch, ausgewählt wird, insbesondere anhand von einer Bedienereingabe und/oder eines mit der Küchenmaschine verbundenen Datenspeichers. Der Datenspeicher kann bspw. als nicht-flüchtiger Datenspeicher und/oder als mobiler Datenspeicher und/oder als ein in der Küchenmaschine integrierter Datenspeicher ausgeführt sein. Insbesondere ist dabei der Datenspeicher derart mit der Verarbeitungsvorrichtung verbunden, dass die im Datenspeicher digital gespeicherten Daten durch die Verarbeitungsvorrichtung lesbar und/oder schreibbar sind. Bspw. ist eine Vergleichsvorgabe und/oder das zeitliche Verlaufsmuster digital im Datenspeicher persistent gespeichert. So wird z. B. durch die Bedienereingabe die Art des Lebensmittels und/oder die Art der Zubereitung eingestellt und so das zur Zubereitung vorgesehene (d. h. zuzubereitende) Lebensmittel ausgewählt. In Abhängigkeit von dieser Auswahl kann dann ein der Art der Zubereitung und/oder des Lebensmittels zugeordnetes Verlaufsmuster und/oder zugeordnete Vergleichsvorgabe aus dem Datenspeicher ausgelesen werden und/oder für die Auswertung des Analyseergebnisses herangezogen werden. Die Vergleichsvorgabe umfasst dabei beispielsweise auch Schwellenwerte und/oder charakteristische Verläufe. Insbesondere ist das Entscheidungsergebnis nur dann positiv und/oder es wird nur dann das positive Entscheidungsergebnis berücksichtigt und/oder ein Steuerungssignal ausgegeben, wenn das so herangezogene Verlaufsmuster und/oder die Vergleichsvorgabe im Analyseergebnis detektiert wird und/oder eine Plausibilisierung anhand mindestens eines Schwellenwertes positiv ist.

Es ist insbesondere denkbar, dass ein zeitlicher Verlauf und/oder ein bestimmtes zeitliches Muster und/oder ein Trend der Häufigkeitsverteilung (insbesondere eines charakteristischen Wertes bzw. Schwerpunktes der Häufigkeitsverteilung) ausgewertet wird, insbesondere zum Bestimmen eines Entscheidungsergebnisses, wobei insbesondere bei einer Trendveränderung ein positives Entscheidungsergebnis und bei einem anhaltenden Trend ein negatives Entscheidungsergebnis bestimmt wird. Vorzugsweise ist es denkbar, dass so lange sich der charakteristische Wert, insbesondere der Schwerpunkt, bzw. die Verteilung der Häufigkeit nach rechts bewegt (ansteigend) ein negatives Entscheidungsergebnis bestimmt wird, und wenn sich anschließend der charakteristische Wert, insbesondere Schwerpunkt, bzw. die Verteilung wieder nach links bewegt (absteigend) ein positives Entscheidungsergebnis bestimmt wird, oder umgekehrt. Ein solches zeitliches Muster ist bspw. durch die Vergleichsvorgabe für unterschiedliche Lebensmittel unterschiedlich definiert. In Abhängigkeit von dem Lebensmittel kann daher z. B. ein zugeordnetes Muster ausgelesen und als Vergleichsvorgabe für die Entscheidungsdurchführung und/oder zeitabhängigen Analyse herangezogen werden. Somit kann zuverlässig der Zustand der Zubereitung vorhergesagt werden. Der Schwerpunkt der Häufigkeitsverteilung entspricht bspw. dem Maximum der Häufigkeitsverteilung und/oder ist abhängig von dem Maximum und/oder von den einzelnen Werten der bestimmten Häufigkeit für unterschiedliche Klassen.

Beispielsweise kann es vorgesehen sein, dass in dem Zubereitungsbetrieb die Bearbeitungsvorrichtung mit einem Rührwerk zur zumindest teilweise automatischen Zubereitung von Schlagsahne angesteuert wird. Alternativ oder zusätzlich ist es möglich, dass gemäß dem erfindungsgemäßen Verfahren in dem Zubereitungsbetrieb die Bearbeitungsvorrichtung, insbesondere ein Rührwerk, zur zumindest teilweise automatischen Zubereitung von zumindest einem der nachfolgenden Lebensmittel eingesetzt wird:
- Nudeln
- Reis
- Schlagsahne
- Teig
- Saucen und/oder Emulsionen, wie Mayonnaise
- Eismasse

Dabei kann vorgesehen sein, dass ein Bediener der Küchenmaschine, z. B. über ein Bedienfeld, das zuzubereitende Lebensmittel einstellt. Die Bedienereinstellung bewirkt dabei z. B., dass die Küchenmaschine, insbesondere die Verarbeitungsvorrichtung und/oder die zeitabhängige Analyse, in einer lebensmittelabhängigen Weise parametrisiert wird. So ist es z. B. denkbar, dass gemäß einer ersten Bedienereinstellung die Bearbeitungsvorrichtung im Zubereitungsbetrieb zur zumindest teilweise automatischen Zubereitung von einem ersten Lebensmittel, wie Schlagsahne und/oder dergleichen, angesteuert wird, und gemäß einer zweiten Bedienereinstellung zur (zumindest teilweise automatischen) Zubereitung von einem zweiten Lebensmittel, wie Reis und/oder Nudeln und/oder dergleichen, angesteuert wird. Dabei kann vorgesehen sein, dass hierzu die Parametrisierung der zeitabhängigen Analyse und/oder die Auswertung des Analyseergebnisses und/oder die Vergleichsvorgabe und/oder das vorgegebene zeitliche Verlaufsmuster in Abhängigkeit von der jeweiligen Bedienereinstellung, insbesondere von der Art des Lebensmittels (z. B. Reis oder Nudeln oder Schlagsahne), zur Erzielung einer lebensmittelspezifischen Zubereitung modifiziert werden. Bspw. wird durch die zeitabhängige Analyse bei einer ersten Bedienereinstellung eine erste Vergleichsvorgabe, wie ein erstes vorgegebenes Verlaufsmuster, detektiert und bei einer zweiten Bedienereinstellung eine zweite Vergleichsvorgabe, wie ein zweites vorgegebenes Verlaufsmuster, detektiert. Die erste Vergleichsvorgabe ist bevorzugt an ein erstes Lebensmittel und/oder die zweite Vergleichsvorgabe an ein zweites Lebensmittel angepasst. Die erste Vergleichsvorgabe ist bevorzugt dazu geeignet, ein ansteigendes Motorsignal, insbesondere einen ansteigenden Motorstrom, (insbesondere eines Elektromotors eines Antriebs des Rührwerks) zu repräsentieren. Anhand der ersten Vergleichsvorgabe kann dann bspw. eine Zunahme des Rührwiderstands des Rührwerks aufgrund einer veränderten Konsistenz des ersten Lebensmittels durch die zeitabhängige Analyse detektiert werden. Die zweite Vergleichsvorgabe ist bevorzugt dazu geeignet, ein abfallendes Motorsignal, insbesondere einen abfallenden Motorstrom, (insbesondere des Elektromotors des Antriebs des Rührwerks) zu repräsentieren. Anhand der zweiten Vergleichsvorgabe kann dann bspw. eine Abnahme des Rührwiderstands des Rührwerks aufgrund einer veränderten Konsistenz des zweiten Lebensmittels durch die zeitabhängige Analyse detektiert werden.

Ebenfalls Gegenstand der Erfindung ist eine Küchenmaschine mit mindestens einer Bearbeitungsvorrichtung und mit mindestens einer Überwachungsvorrichtung, wobei in einem Zubereitungsbetrieb die Bearbeitungsvorrichtung zur zumindest teilweise automatischen Zubereitung von Lebensmitteln ansteuerbar ist, und wobei durch die Überwachungsvorrichtung zumindest während des Zubereitungsbetriebs eine Ermittlung von insbesondere zeitlich aufeinander folgenden Erfassungswerten an der Küchenmaschine durchführbar ist, wobei die Erfassungswerte für wenigstens einen Zubereitungsparameter der Küchenmaschine spezifisch sind. Hierbei ist vorgesehen, dass durch die Überwachungsvorrichtung zumindest eine Analyseinformation in Abhängigkeit von den zeitlich aufeinander folgenden Erfassungswerten bestimmbar ist, und durch eine zeitabhängige Analyse eine Häufigkeitsverteilung der Analyseinformation ermittelbar ist, wodurch ein für einen Zustand der Zubereitung spezifisches Analyseergebnis bestimmbar ist, wobei in Abhängigkeit von dem Analyseergebnis mindestens ein Steuerungssignal zur Beeinflussung des Zubereitungsbetriebs ausgebbar ist. Damit bringt die erfindungsgemäße Küchenmaschine die gleichen Vorteile mit sich, wie sie ausführlich mit Bezug auf ein erfindungsgemäßes Verfahren beschrieben worden sind. Zudem kann die erfindungsgemäße Küchenmaschine, insbesondere eine Steuerungsvorrichtung der Küchenmaschine, geeignet sein, gemäß einem erfindungsgemäßen Verfahren betreibbar zu sein. Das Steuerungssignal wird dabei bspw. durch eine Verarbeitungsvorrichtung und/oder durch die Überwachungsvorrichtung und/oder durch die Steuerungsvorrichtung und/oder durch eine Elektronik der Küchenmaschine ausgegeben. Weiter ist es denkbar, dass die Analyse und/oder das erfindungsgemäße Verfahren durch die Steuerungsvorrichtung und/oder durch die Überwachungsvorrichtung und/oder durch die Verarbeitungsvorrichtung zumindest teilweise durchführbar ist. Das Steuerungssignal kann bspw. ein elektrisches, insbesondere ein binäres und/oder elektronisches, Signal sein, welches zur Kommunikation zwischen Elektronikkomponenten und/oder zur internen Verarbeitung in der Verarbeitungsvorrichtung und/oder zur Ansteuerung von Elektronikkomponenten dient. Die Steuerungsvorrichtung kann dabei insbesondere die Überwachungsvorrichtung und/oder (bspw. auch verteilt als elektrisches und/oder elektronisches System angeordnete) weitere Komponente der erfindungsgemäßen Küchenmaschine umfassen. Insbesondere ist die Steuerungsvorrichtung elektrisch mit der Bearbeitungsvorrichtung verbunden.

Es kann weiter möglich sein, dass die Bearbeitungsvorrichtung zumindest einen Antrieb und ein durch den Antrieb betreibbares Bearbeitungswerkzeug, insbesondere ein Rührwerk der Küchenmaschine, umfasst, und insbesondere die Überwachungsvorrichtung elektrisch mit dem Antrieb zur Ermittlung der Erfassungswerte verbunden ist. Die Überwachungsvorrichtung weist dabei insbesondere eine Erfassungsvorrichtung auf, um Erfassungswerte bspw. an dem Antrieb zu erfassen. Hierzu kann die Überwachungsvorrichtung auch zumindest einen oder mehrere Sensoren aufweisen, welche in der Küchenmaschine integriert sind und/oder an der Küchenmaschine angeordnet sind. Der Sensor und/oder die Sensoren können dabei jeweils bspw. als Temperatursensor und/oder Spannungssensor und/oder Stromsensor und/oder Drehzahlsensor und/oder Drehmomentsensor ausgebildet sein. Entsprechend sind die Erfassungswerte bspw. als Spannungserfassungswerte und/oder Stromerfassungswerte und/oder Drehmomenterfassungswerte und/oder Drehzahlerfassungswerte und/oder Temperaturerfassungswerte ausgeführt. Dies hat den Vorteil, dass zuverlässig die relevanten Erfassungswerte ermittelt werden können.

Gemäß einem weiteren Vorteil kann vorgesehen sein, dass die Bearbeitungsvorrichtung und/oder die Überwachungsvorrichtung in der Küchenmaschine integriert ist, und insbesondere die Ermittlung der Erfassungswerte direkt durch Erfassung (Messung) an der Bearbeitungsvorrichtung innerhalb Küchenmaschine erfolgt. Beispielsweise können die Bearbeitungsvorrichtung und/oder die Überwachungsvorrichtung innerhalb eines Gehäuses (und/oder zumindest teilweise an dem Gehäuse) der Küchenmaschine angeordnet sein und/oder fest mit weiteren Bestandteilen der Küchenmaschine verbunden sein. Die Erfassung kann bspw. dadurch erfolgen, dass ein Motorstrom eines Motors eines Rührwerks der Küchenmaschine gemessen wird. Zur Ermittlung der Erfassungswerte kann bspw. ein Spannungsabgriff und/oder ein Shuntwiderstand an einer elektrischen Leitung eines Antriebs der Küchenmaschine vorgesehen sein. Dies hat den Vorteil, dass in einfacher Weise die Erfassungswerte ermittelt werden können und damit ein Zustand der Zubereitung ermittelt werden kann.

Es ist ferner denkbar, dass die Überwachungsvorrichtung eine elektrische und/oder elektronische Verarbeitungsvorrichtung aufweist, und/oder dass die Verarbeitungsvorrichtung und/oder die Überwachungsvorrichtung zumindest eine Elektronikkomponente aufweist. Die Elektronikkomponente umfasst bspw. einen Mikroprozessor und/oder einen digitalen Signalprozessor und/oder einen nicht-flüchtigen Datenspeicher und/oder eine Anwendungsspezifische integrierte Schaltung (ASIC) und/oder ein Field Programmable Gate Array (FPGA) und/oder dergleichen. Dies ermöglicht eine schnelle und zuverlässige Durchführung der zeitabhängigen Analyse.

Ebenfalls Gegenstand der Erfindung ist ein Computerprogrammprodukt zum Betreiben einer Küchenmaschine, insbesondere einer erfindungsgemäßen Küchenmaschine. Hierbei ist vorgesehen, dass das Computerprogrammprodukt dazu ausgeführt ist, ein erfindungsgemäßes Verfahren durchzuführen. Damit bringt das erfindungsgemäße Computerprogrammprodukt die gleichen Vorteile mit sich, wie sie ausführlich mit Bezug auf ein erfindungsgemäßes Verfahren und eine erfindungsgemäße Küchenmaschine beschrieben worden sind. Zudem kann ein erfindungsgemäßes Computerprogrammprodukt geeignet sein, durch eine Verarbeitungsvorrichtung einer erfindungsgemäßen Küchenmaschine ausgelesen und/oder ausgeführt zu werden, insbesondere zur Durchführung des erfindungsgemäßen Verfahrens. Ein erfindungsgemäßes Computerprogrammprodukt ist bspw. eine Firmware, welche vorzugsweise zum Betreiben der erfindungsgemäßen Küchenmaschine eingesetzt wird und/oder digital an die Küchenmaschine bzw. die Datenspeichereinheit und/oder Verarbeitungsvorrichtung übertragbar ist. Weiter kann das erfindungsgemäße Computerprogrammprodukt auch als digitales Speichermedium, insbesondere als Flash-Speicher und/oder digitales optisches Speichermedium, wie eine CD und/oder DVD und/oder Blu-ray, ausgeführt sein.

Es kann ferner im Rahmen der Erfindung vorgesehen sein, dass (insbesondere durch die Überwachungsvorrichtung) zumindest während des Zubereitungsbetriebs und/oder bei einer aufzuzeichnenden Zubereitung (des bzw. im Zubereitungsbetrieb) eine Zubereitungsaufzeichnung der Zubereitung erfolgt bzw. erstellt wird. Hierzu werden (bspw. wiederholt und/oder zyklisch und/oder einmalig) weitere Erfassungswerte und/oder weitere Aufzeichnungen des zubereiteten Lebensmittels und/oder zumindest ein Ansteuerungswert und/oder zumindest ein Ergebniswert (während der Zubereitung) ermittelt. Das Ermitteln des mind. einen Ansteuerungswertes erfolgt bspw. durch eine Ansteuerungswerterfassung von mind. einem Ansteuerungsparameter, wobei der Ansteuerungsparameter für die (aufzuzeichnende) Zubereitung spezifisch ist. Das Ermitteln des mind. einen Ergebniswertes erfolgt bspw. durch eine Ergebniswerterfassung von mind. einem Ergebnisparameter, wobei der Ergebnisparameter für das Ergebnis der Zubereitung und/oder für die Zubereitung spezifisch ist. Anschließend kann insbesondere ein Aufzeichnen des ermittelten Ansteuerungswertes und/oder des ermittelten Ergebniswertes in einer Zubereitungsaufzeichnung (z. B. als digital und/oder persistent gespeicherte Information) erfolgen, sodass vorzugsweise diese der aufzuzeichnenden Zubereitung (als eine aufgezeichnete Zubereitung) zugeordnet ist. Der Ansteuerungswert umfasst dabei bspw. mind. einen Erfassungswert und/oder mind. eine Aufzeichnung des zubereiteten Lebensmittels. Der Ansteuerungsparameter umfasst bspw. mind. eine Erfassungsgröße und/oder mind. eine durch einen Sensor der Küchenmaschine erfasste Größe und/oder eine Bedienereingabe und/oder dergleichen. Insbesondere umfasst der Ergebniswert zumindest einen Erfassungswert und/oder zumindest eine Aufzeichnung des zubereiteten Lebensmittels. Vorzugsweise umfasst der Ergebnisparameter zumindest eine Erfassungsgröße und/oder zumindest eine Bedienereingabe und/oder zumindest eine Größe, welche durch einen Sensor der Küchenmaschine erfasst wird. Besonders bevorzugt unterscheiden sich dabei der Ansteuerungsparameter und der Ergebnisparameter voneinander. Dies hat den Vorteil, dass eine Zubereitung aufgezeichnet und insbesondere zu einem späteren Zeitpunkt reproduziert werden kann. Hierzu ist es insbesondere vorgesehen, dass die Ansteuerungsparameter, welche insbesondere zur Steuerung der Zubereitung dienen, möglichst umfassend und/oder vollständig erfasst und vorzugsweise durch die Ansteuerungswerte aufzeichenbar und/oder reproduzierbar sind. Der Ergebniswert und/oder der Ergebnisparameter dient dabei insbesondere dazu, das Ergebnis der aufgezeichneten Zubereitung aufzuzeichnen und/oder zu reproduzieren, z. B. einen Zustand des zubereiteten Lebensmittels.

Der Ansteuerungsparameter ist dabei insbesondere ein derartiger Parameter, insbesondere eine derartige Erfassungsgröße, welcher Informationen über die konkrete Zubereitung, insbesondere die Ansteuerung der Zubereitung, und/oder eines einzelnen Zubereitungsschrittes der Zubereitung umfasst. So umfasst der Ansteuerungsparameter bspw. Informationen über eine Drehzahl eines Rührwerks der Küchenmaschine und/oder einer Drehrichtung (z. B. Links- oder Rechtslauf) des Rührwerks, und/oder über eine eingestellte Temperatur eines Heizelementes bzw. einer Heizung der Küchenmaschine, und/oder über eine Zubereitungsdauer, insbesondere eines einzelnen Zubereitungsschrittes. Z. B. bei der Zubereitung von Röstzwiebeln beeinflusst der Ansteuerungsparameter den Röstgrad der Zwiebeln, da hierdurch bspw. die Temperatur zur Erhitzung der Zwiebeln und/oder die Dauer der Erhitzung bestimmt wird. Vorzugsweise ist dabei der Ergebnisparameter spezifisch für das Ergebnis der Zubereitung, z. B. den Röstgrad der Zwiebeln. Der Ergebnisparameter kann somit bspw. eine visuelle Aufzeichnung des Lebensmittels, z. B. durch einen Kamerasensor, und/oder eine sonstige physikalische Größe der Küchenmaschine, wie z. B. ein Motorstrom, sein. Anhand des Motorstroms kann bspw. die Konsistenz des Lebensmittels, wie z. B. Schlagsahne, überprüft werden. Auch ist es denkbar, dass der Ergebnisparameter eine Bedienereingabe betrifft, z. B. zur Verkürzung der Zubereitungszeit. Es kann bspw. möglich sein, dass wenn der gewünschte Röstgrad erreicht ist, durch eine Bedienereingabe eine Verkürzung der durch das Rezept vorgegebenen Zubereitungsdauer erfolgt. Entsprechend kann bspw. der Ergebnisparameter eine solche benutzerspezifische Anpassung umfassen. Auch ist es denkbar, dass der Ergebnisparameter eine Anpassung aufgrund erfasster Umgebungsparameter betrifft, welche bspw. automatisiert durchgeführt wird, um die Zubereitung unter verschiedenen Umgebungsbedingungen zu optimieren.

Weiter kann es möglich sein, dass zur Reproduktion von der aufgezeichneten Zubereitung zunächst ein Auswerten der Zubereitungsaufzeichnung erfolgt, insbesondere wenn ein weiterer Zubereitungsbetrieb für eine weitere Zubereitung initiiert wird, und vorzugsweise wenn eine Rezeptauswahl erfolgt. Weiter kann anschließend ein Steuerungssignal ausgegeben werden, insbesondere in Abhängigkeit von der Auswertung und/oder von der Zubereitungsaufzeichnung, sodass die weitere Zubereitung an die Zubereitungssaufzeichnung angepasst erfolgt. Insbesondere kann somit das Ergebnis der aufgezeichneten Zubereitung und/oder zumindest ein Zubereitungsschritt der aufgezeichneten Zubereitung und/oder ein Verlauf der Ansteuerungsparameter der aufgezeichneten Zubereitung reproduziert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: eine schematische Darstellung einer erfindungsgemäßen Küchenmaschine,
- Figur 2: eine weitere schematische Darstellung einer erfindungsgemäßen Küchenmaschine,
- Figur 3-4: schematische Darstellungen zur Visualisierung eines erfindungsgemäßen Verfahrens,
- Figur 5: eine schematische Darstellung eines Erfassungswertverlaufs, insbesondere von ungefilterten Erfassungswerten,
- Figur 6: eine schematische Darstellung eines Erfassungswertverlaufs, insbesondere von gefilterten Erfassungswerten,
- Figur 7: eine weitere schematische Darstellung des Erfassungswertverlaufs, insbesondere der gefilterten Erfassungswerten und
- Figur 8-11: schematische Darstellungen zur Veranschaulichung einer zeitabhängigen Analyse.

In den nachfolgenden Figuren werden für die gleichen technischen Merkmale auch von unterschiedlichen Ausführungsbeispielen die identischen Bezugszeichen verwendet.

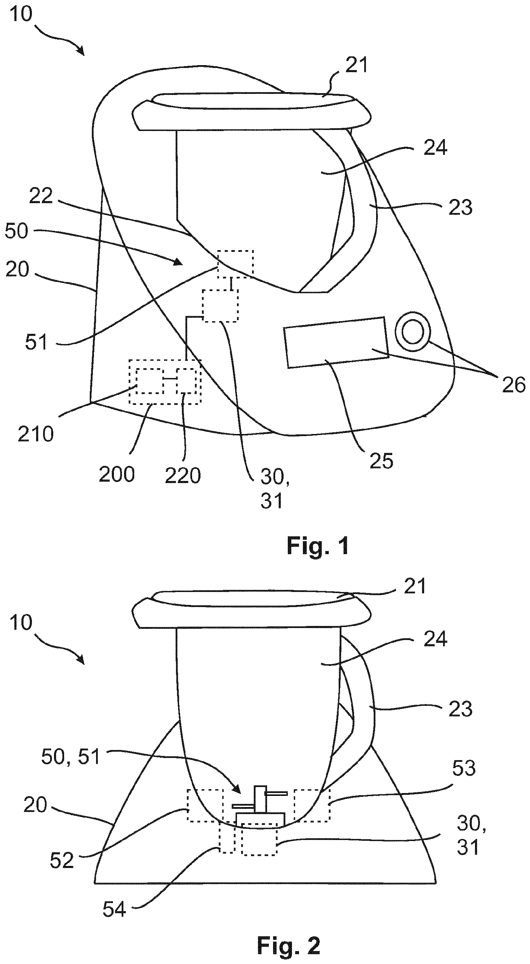

In Figur 1 und 2 ist schematisch eine erfindungsgemäße Küchenmaschine 10 gezeigt. Die Küchenmaschine 10 umfasst ein Gehäuse 20, welches eine Aufnahme 22 für ein Rührgefäß 24 aufweist. Das Rührgefäß 24 ist dabei bspw. durch einen Deckel 21 verschließbar, und weist vorzugsweise einen Handgriff 23 auf. Ein Rührwerk 51 und/oder ein Heizelement 53 und/oder ein Sensor 52 ist bevorzugt im Bereich des Rührgefäßes 24 und/oder im Inneren des Rührgefäßes 24 angeordnet. Zudem umfasst die Küchenmaschine 10 ein Bedienfeld 26, welches bspw. ein Display 25, vorzugsweise einen Touchscreen 25, umfasst. Hierbei dient das Display 25 insbesondere sowohl als Eingabeals auch als Ausgabemittel. Über das Bedienfeld 26 wird insbesondere ermöglicht, dass ein Bediener der Küchenmaschine 10 Betriebsparameter, wie die Rührwerksdrehzahl, die Heiztemperatur und/oder die Zeitdauer der Zubereitung bzw. des Rührens und/oder verschiedene Programme der Küchenmaschine 10, einstellen und/oder aktivieren und/oder deaktivieren kann. Weiter kann über das Display 25 auch die Ausgabe von rezeptbezogenen Anweisungen und/oder Hinweisen und/oder grafischen Bedienelementen erfolgen. Über die grafischen Bedienelemente, welche bevorzugt Bestandteil einer grafischen Benutzeroberfläche sind, kann als Eingabemittel eine Bedienung der erfindungsgemäßen Küchenmaschine 10 durchgeführt werden. Die Rezepte sind bspw. in einem nicht-flüchtigen Datenspeicher 220 der Küchenmaschine 10 gespeichert. Insbesondere ermöglicht das Eingabemittel auch die Aktivierung und/oder Deaktivierung eines Zubereitungsbetriebs und/oder die Einstellung der Art der Zubereitung und/oder der Art des zuzubereitenden Lebensmittels.

Wie in den Figuren 1 und 2 dargestellt ist, umfasst die Küchenmaschine 10 zumindest eine Bearbeitungsvorrichtung 50, welche insbesondere zumindest ein Bearbeitungswerkzeug 51, wie ein Rührwerk 51, umfasst. Zur Überwachung und/oder Ansteuerung 160, insbesondere der Bearbeitungsvorrichtungen 50, ist außerdem mindestens eine Überwachungsvorrichtung 200 vorgesehen, welche z. B. eine Verarbeitungsvorrichtung 210 und/oder den Datenspeicher 220 umfasst. Weiter kann es vorgesehen sein, dass die Bearbeitungsvorrichtung 50 und/oder weitere Bearbeitungsvorrichtungen 50 zumindest einen Sensor 52 und/oder eine Heizung 53 und/oder eine Waage 54 umfassen, welche bspw. in der Küchenmaschine 10 integriert sind. Die Waage 54 dient insbesondere dazu, eine Gewichtskraft auf das Rührgefäß 24 zu erfassen bzw. zu messen. Hierzu wird das Wägeobjekt bspw. auf und/oder in das Rührgefäß 24 gelegt und/oder eingefüllt. Die Heizung 53 ist bspw. derart ausgestaltet, dass das Lebensmittel im Rührgefäß 24 durch die Heizung 53 erhitzt werden kann, vorzugsweise bis auf Temperaturen in einem Bereich von 10°C bis 150°C, vorzugsweise 30°C bis 120°C.

In Figur 2 ist zudem schematisch ein Antrieb 30 der Küchenmaschine 10 gezeigt, welcher einen (elektrischen) Motor 31 aufweist. Dabei ist der Antrieb 30 und/oder der Motor 31 derart mit zumindest einer Bearbeitungsvorrichtung 50 und/oder mit zumindest einem Bearbeitungswerkzeug 51, insbesondere dem Rührwerk 51, verbunden, dass eine Kraftübertragung von dem Motor 31 und/oder einer Antriebswelle des Antriebs 30 an die Bearbeitungsvorrichtung 50 und/oder das Bearbeitungswerkzeug 51 und/oder das Rührwerk 51 durchgeführt wird. Es kann vorgesehen sein, dass die Überwachungsvorrichtung 200 zur Überwachung elektrisch zumindest mit dem Sensor 52 und/oder der Bearbeitungsvorrichtung 50 und/oder dem Antrieb 30 und/oder dem Motor 31 des Antriebs 30 verbunden ist.

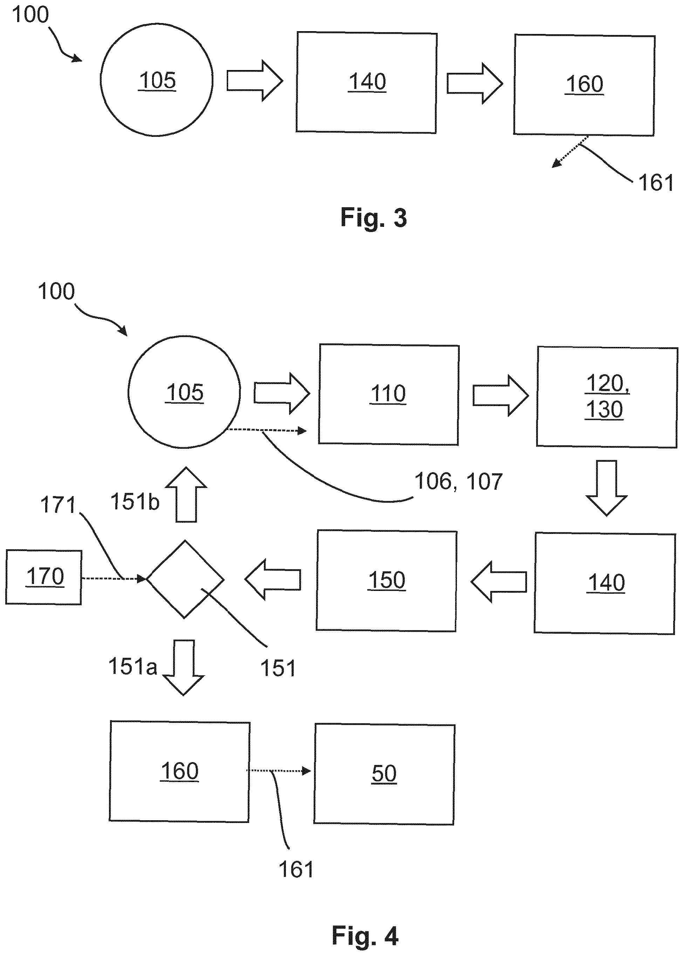

In Figur 3 ist schematisch ein erfindungsgemäßes Verfahren 100 visualisiert. Dabei wird gemäß einem ersten Verfahrensschritt zumindest eine Erfassung 105 an der Küchenmaschine 10 durchgeführt. Durch die Erfassung 105 werden dabei zeitlich aufeinanderfolgende Erfassungswerte 106 ermittelt, wobei die Erfassungswerte 106 für wenigstens einen Zubereitungsparameter der Küchenmaschine 10 spezifisch sind, d. h. bspw. proportional zum Motorstrom des Motors 31 des Antriebs 30 der Küchenmaschine 10. Anschließend erfolgt eine zeitabhängige Analyse 140 von zumindest einer Analyseinformation, wobei die Analyseinformation in Abhängigkeit von den zeitlich aufeinanderfolgenden Erfassungswerten 106 bestimmt wird. Ein Analyseergebnis der zeitabhängigen Analyse 140 hat dabei Einfluss auf eine Ansteuerung 160, insbesondere der Bearbeitungsvorrichtung 50. Dabei wird in Abhängigkeit von dem Analyseergebnis mindestens ein Steuerungssignal 161 ausgegeben, welches den Zubereitungsbetrieb, d. h. bspw. den Betrieb der Bearbeitungsvorrichtung 50, beeinflusst. Das Steuerungssignal 161 wird dabei bspw. durch eine Verarbeitungsvorrichtung 210 und/oder durch die Überwachungsvorrichtung 200 und/oder durch eine nicht dargestellte Steuerungsvorrichtung ausgegeben.

In Figur 4 werden schematisch weitere Verfahrensschritte eines erfindungsgemäßen Verfahrens 100 visualisiert. Nach einer Erfassung 105 zur Ermittlung der Erfassungswerte 106 werden die Erfassungswerte 106 einer weiteren Signalverarbeitung unterzogen, um daraus resultierend eine Analyseinformation zu bestimmen. Im Zuge der Signalverarbeitung erfolgt zunächst eine Filterung 110 der ermittelten (ungefilterten) Erfassungswerte 106, 106a, wodurch die gefilterten Erfassungswerte 106b bestimmt werden. Dies ermöglicht zunächst die Glättung des zeitlichen Verlaufs 107 der Erfassungswerte 106. Anschließend kann es vorgesehen sein, dass eine Auswertung 120 der gefilterten Erfassungswerte 106b erfolgt, vorzugsweise eine Generierung von Merkmalen 121 und/oder eine Merkmalsauswertung 130. Zur Merkmalsauswertung 130 können bspw. die generierten Merkmale 121 mit einem Schwellenwert 171 verglichen werden und/oder eine Häufigkeitsanalyse durchgeführt werden. Anhand der generierten Merkmale 121 und/oder der gefilterten Erfassungswerte 106b und/oder der ungefilterten Erfassungswerte 106a erfolgt anschließend eine zeitabhängige Analyse 140, vorzugsweise eine Häufigkeitsanalyse, wodurch ein Analyseergebnis bestimmt wird. In Abhängigkeit von diesem Analyseergebnis wird ein positives oder negatives Entscheidungsergebnis 151 bestimmt, wobei hierzu eine Entscheidungsdurchführung 150 durchgeführt wird. Insbesondere wird ein positives Entscheidungsergebnis 151a nur dann bestimmt, wenn das Analyseergebnis einen zukünftigen bestimmten (gewünschten) Zustand der Zubereitung indiziert, bspw. einen optimalen Fertigstellungszeitpunkt der Zubereitung. Bei einem negativen Entscheidungsergebnis 151b wird dabei der Zubereitungsbetrieb nicht beeinflusst und/oder kein Steuerungssignal 161 ausgegeben. Mit anderen Worten wird mit der Zubereitung des Lebensmittels im Zubereitungsbetrieb normal fortgefahren. Insbesondere kann es allerdings darüber hinaus noch weitere Abbruchbedingungen für den Zubereitungsbetrieb geben, so dass bspw. bei einer Überschreitung einer maximalen Zeitdauer des Zubereitungsbetriebs der Zubereitungsbetrieb automatisch deaktiviert wird, unabhängig von dem Analyseergebnis. Nachdem das negative Entscheidungsergebnis 151b bestimmt wurde, wird (bspw. automatisch und/oder nach einer bestimmten Zeitdauer und/oder zyklisch) erneut zumindest eine Erfassung 105 durchgeführt und/oder eine zeitabhängige Analyse 140 durchgeführt. Wenn allerdings ein positives Entscheidungsergebnis 151a bestimmt wird, so erfolgt eine Ansteuerung 160 der Bearbeitungsvorrichtung 50 durch die Ausgabe eines Steuerungssignals 161 zur Beeinflussung des Zubereitungsbetriebs. Zur Entscheidungsdurchführung 150 kann ferner auch mindestens ein Schwellenwert 171 zur Plausibilisierung 170 herangezogen werden.

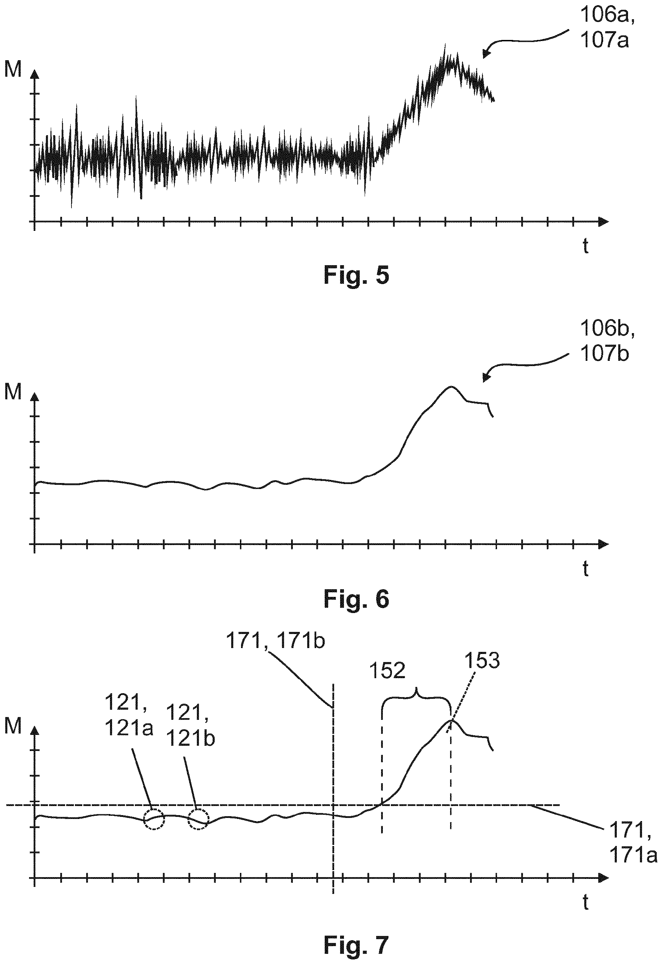

In Figur 5 ist schematisch ein ungefilterter Verlauf 107a von ungefilterten Erfassungswerten 106a gezeigt. Die ungefilterten Erfassungswerte 106a werden dabei durch Erfassung 105 einer Messgröße M, wie eines Motorsignals, ermittelt und sind als Verlauf 107 über die Zeit t dargestellt. Hierbei ist deutlich die hochfrequente Änderung und/oder Störung der Erfassungswerte 106 zu erkennen. Zur Glättung der ungefilterten Erfassungswerte 106a kann daher eine Filterung 110 durchgeführt werden, wodurch gefilterte Erfassungswerte 106b bzw. ein gefilterte zeitlicher Verlauf 107b ermittelt werden. Der gefilterte Verlauf 107b wird in Figur 6 schematisch dargestellt. Die Filterung 110 ermöglicht dabei eine verbesserte und zuverlässigere Auswertung der Erfassungswerte 106 z. B. durch die zeitabhängige Analyse.

Figur 7 zeigt einen typischen zeitlichen Verlauf 107, insbesondere gefilterten Verlauf 107b, der Erfassungswerte 106, bspw. für die Zubereitung von Schlagsahne. Die dargestellten gefilterten Erfassungswerte 106b sind bspw. abhängig von einem Motorsignal als Messgröße M. Es ist erkennbar, dass zunächst (bis zum zweiten Schwellenwert 171b) nur geringfügige Schwankungen auftreten, und somit ein gleichbleibender Trend erkennbar ist. Die Merkmale 121 können bspw. dadurch generiert werden, dass eine Differenz und/oder ein Gradient der Erfassungswerte 106 bestimmt wird. Durch eine Merkmalsauswertung 130 kann dann bspw. das generierte Merkmal 121 herangezogen werden, um ein bestimmtes Muster in dem Verlauf 107 zu erkennen. Hierzu kann bspw. auch die zeitabhängige Analyse 140 anhand der Erfassungswerte 106 und/oder generierten Merkmale 121 durchgeführt werden. Zur Plausibilisierung 170 des Analyseergebnisses können dabei die Schwellenwerte 171 dienen. Die Schwellenwerte 171 sind insbesondere empirisch definiert, so dass bspw. ein zweiter Schwellenwert 171b den Zeitpunkt angibt, an welchem frühestens der gewünschte Zustand der Zubereitung (zum Beispiel die gewünschte Konsistenz der Schlagsahne) auftritt. Im gekennzeichneten Bereich 152 ist dabei ein Verlaufsmuster 152 erkennbar, welches den gewünschten Zeitpunkt der Zubereitung indiziert. Das Auftreten des Verlaufsmusters 152, also z. B. die spezifische Veränderung des Gradienten und/oder des Trends, ist dabei insbesondere durch den Einfluss des Lebensmittels auf die Bearbeitungsvorrichtung 50 bedingt. So kann bspw. die aufgrund der Zubereitung veränderte Konsistenz dazu führen, dass ein Rührwiderstand ansteigt oder absteigt und damit der Motorstrom des Elektromotors 31 für das Rührwerk 51 entsprechend ansteigt oder absteigt wird. Die Erfassungswerte 106 sind daher abhängig von der Zubereitung (bspw. dem Rührwiderstand) und das Verlaufsmuster 152 der Erfassungswerte 106 kann somit insbesondere zur Auswertung der Zubereitung und/oder Konsistenz dienen. Das Verlaufsmuster 152 ist bspw. empirisch vordefiniert. Es kann möglich sein, dass durch die zeitabhängige Analyse 140 und/oder Entscheidungsdurchführung 150 eine Vergleichsvorgabe wie das Verlaufsmuster 152 detektiert wird. Die Detektion des Verlaufsmusters 152 ermöglicht dann eine frühzeitige Vorhersage eines kritischen Punktes 153, an welchem der gewünschte Zustand der Zubereitung auftritt. Insbesondere können die Schritte des erfindungsgemäßen Verfahrens 100 derart angepasst und/oder z. B. durch eine Echtzeitanforderung zeitlich begrenzt sein, dass trotz einer Latenzzeit der Auswertung das Steuerungssignal 161 rechtzeitig ausgegeben wird, um den Zubereitungsbetrieb beim zeitlichen Erreichen des gewünschten Zustands bzw. des kritischen Punktes 153 zu beeinflussen und/oder zu deaktivieren.

In Figur 7 ist weiter zu sehen, dass die Erfassungswerte 106, insbesondere der gefilterte Verlauf 107b zur Generierung 120 von Merkmalen gemäß einer Auswertung 120 herangezogen werden kann. So kann durch die Auswertung 120 bspw. ein erstes generiertes Merkmal 121a und ein zweites generiertes Merkmals 121b generiert werden. Das erste generierte Merkmal 121a indiziert dabei bspw. eine Steigung (d. h. eine positive Differenz) und das weiter generierte Merkmal 121b indiziert dabei bspw. einen Abfall (d. h. eine negative Differenz). Weiter ist es möglich, dass durch die Merkmalsauswertung 130 und/oder die zeitabhängige Analyse 140 eine Vergleichsvorgabe, insbesondere ein Verlaufsmuster 152, in dem zeitlichen Verlauf 107 detektiert wird. Hierzu wird bspw. ein Histogramm ausgewertet. Wie in Figur 7 dargestellt ist, entspricht das Verlaufsmuster 152 (in Abhängigkeit von dem zubereiteten Lebensmittel) bspw. einem durchgehenden Anstieg der Erfassungswerte 106 über einen bestimmten Zeitraum. Auch kann lebensmittelabhängig eine erste Vergleichsvorgabe, wie ein erstes Verlaufsmuster 152, einen durchgehenden Anstieg und eine zweite Vergleichsvorgabe, wie ein zweites Verlaufsmuster 152, einen durchgehenden Abfall der Erfassungswerte 106 umfassen. In Abhängigkeit von einer Bedienereinstellung wird dann die entsprechende erste oder zweite Vergleichsvorgabe berücksichtigt. Weiter kann zumindest ein Schwellenwert 171 berücksichtigt werden, wodurch bspw. nur Erfassungswerte 106 in einem bestimmten Wertebereich berücksichtigt werden und/oder nur ein bestimmter Zeitabschnitt der Erfassungswerte 106 berücksichtigt wird.

Eine Plausibilisierung 170 des Analyseergebnisses, insbesondere auch die Begrenzung des Wertebereichs der Erfassungswerte 106 für die Entscheidungsdurchführung 150, wird durch den Schwellenwert 171 ermöglicht. Der Schwellenwert 171 umfasst insbesondere mindestens einen ersten Schwellenwert 171, 171a, welcher in Figur 7 durch eine gestrichelte horizontale Linie repräsentiert ist. Es wird eine Entscheidungsdurchführung 150 nur dann durchgeführt und/oder nur dann ein positives Entscheidungsergebnis 151a bestimmt, wenn die aktuell ermittelten Erfassungswerte 106 oberhalb des ersten Schwellenwerts 171, 171a liegen. Die Begrenzung des Zeitabschnitts für die Entscheidungsdurchführung 150 wird bevorzugt durch einen zweiten Schwellenwert 171, 171b ermöglicht, welcher durch eine vertikale gestrichelte Linie repräsentiert ist. Es wird entsprechend nur dann eine Entscheidungsdurchführung 150 durchgeführt und/oder nur dann ein positives Entscheidungsergebnis 151a bestimmt, wenn die zeitliche Dauer des Zubereitungsbetriebs den zweiten Schwellenwert 171b zeitlich übersteigt.

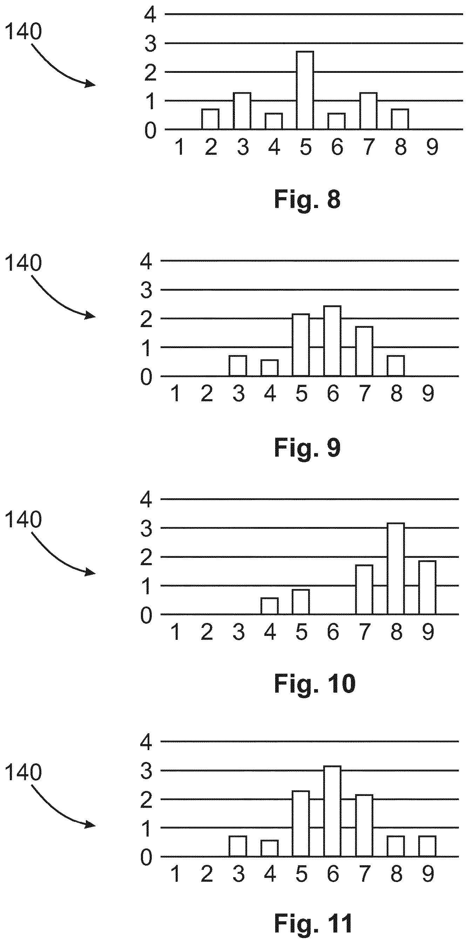

In den Figuren 8 bis 11 ist schematisch das Vorgehen für eine Bestimmung der Häufigkeitsverteilung und/oder für eine zeitabhängige Analyse 140, insbesondere für eine Häufigkeitsanalyse, dargestellt. Die Figuren 8 bis 11 zeigen dabei aufeinanderfolgend einen zeitlich fortschreitenden Verlauf der Häufigkeitsverteilung. Dazu werden Analysewerte, insbesondere die Erfassungswerte 106, verschiedenen Klassen zugeordnet, welche durch die Ziffern 1 bis 9 der horizontalen Achse repräsentiert werden. (Höhere Ziffern entsprechen dabei z. B. höheren Wertebereichen der jeweiligen Klassen.) Die Analysewerte sind bspw. Differenzen benachbarter Erfassungswerte 106 bzw. der entsprechende Gradient der Erfassungswerte 106. Jeder Analysewert wird dann z. B. der Klasse zugeordnet, in deren Wertebereich der Analysewert liegt. Anschließend oder zuvor wird die Häufigkeitsdichte, repräsentiert durch die Ziffern 0 bis 4 der vertikalen Achse, bestimmt. Über die Klassen 1 bis 9 ist damit eine Häufigkeitsverteilung der unterschiedlichen Häufigkeitsdichten bestimmt und in den Figuren 8 bis 11 erkennbar. Dieser Vorgang wird zyklisch während des Zubereitungsbetriebs wiederholt, so dass ein zeitlicher Verlauf der bestimmten Häufigkeitsdichte und/oder ein charakteristischer Wert, insbesondere Schwerpunkt, der Häufigkeitsverteilung für verschiedene Zeitpunkte ermittelbar sind. Es ist ersichtlich, dass der Schwerpunkt der Verteilung in Figur 9 im Vergleich zur früheren Schwerpunktverteilung in Figur 8 weiter rechts (bei den höheren Klassen) liegt. Eine weitere Bewegung des Schwerpunktes hin zu höheren Klassen ist in Figur 10 zu sehen, so dass anhand des Wertes des Schwerpunktes bzw. Schwerpunkt-Maximums (z. B. in Figur 10) ein deutlicher Anstieg des Erfassungswertverlaufs 107 detektiert werden kann. Dieser Verlauf kann dann bspw. genutzt werden, um eine Vergleichsvorgabe, wie ein zeitliches Verlaufsmuster 152, zu detektieren, welches für einen bestimmten Zustand der Zubereitung charakteristisch ist. Als Bedingung für die Ausgabe eines positiven Entscheidungsergebnisses 151a kann bspw. vorgesehen sein, dass eine zeitliche Verschiebung des Schwerpunktes über eine vorbestimmte Schwelle hinaus z. B. gemäß Figur 10 detektiert wird. Alternativ oder zusätzlich kann es vorgesehen sein, dass als Bedingung für die Bestimmung eines positiven Entscheidungsergebnisses 151a ein bestimmtes zeitliches Verlaufsmuster 152 detektiert wird. Die (erste) Vergleichsvorgabe und/oder das (erste) zeitliche Verlaufsmuster 152 umfasst z. B. einen definierten ersten Verlauf des Schwerpunktes, bei welchem nach einer maximalen Verschiebung des Schwerpunktes (gemäß Figur 10) in eine erste Richtung die Verschiebung des Schwerpunktes wieder rückläufig ist, d. h. in eine zur ersten Richtung entgegengesetzte Richtung (z. B. zu geringeren Klassen des Histogramms) erfolgt (gemäß Figur 11). Die (erste) Vergleichsvorgabe ist damit spezifisch für ein erstes Lebensmittel wie Schlagsahne, bei welchem z. B. der Rührwiderstand zunimmt und/oder das Motorsignal ansteigt. Vorzugsweise ist auch eine zweite Vergleichsvorgabe vorgesehen, welche für ein zweites Lebensmittel wie Reis spezifisch ist. Hier nimmt bspw. der Rührwiderstand ab, was (im Gegensatz zum ersten Lebensmittel) das Motorsignal absteigen lässt. Die (zweite) Vergleichsvorgabe und/oder das (zweite) zeitliche Verlaufsmuster 152 umfasst daher z. B. einen definierten zweiten Verlauf, bei welchem nach einer maximalen Verschiebung des Schwerpunktes in die entgegengesetzte Richtung die Verschiebung des Schwerpunktes wieder rückläufig ist, d. h. in die erste Richtung (z. B. zu höheren Klassen des Histogramms) erfolgt.

Die voranstehende Erläuterung der Ausführungsformen beschreibt die vorliegende Erfindung ausschließlich im Rahmen von Beispielen.

### Bezugszeichenliste

- 10: Küchenmaschine

- 20: Gehäuse
- 21: Deckel
- 22: Rührgefäß-Aufnahme
- 23: Handgriff
- 24: Rührgefäß
- 25: Display
- 26: Bedienfeld

- 30: Antrieb
- 31: Motor

- 50: Bearbeitungsvorrichtung
- 51: Bearbeitungswerkzeug, Rührwerk
- 52: Sensor
- 53: Heizelement
- 54: Waage

- 100: Verfahren
- 105: Erfassung
- 106: Erfassungswerte
- 106a: ungefilterte Erfassungswerte
- 106b: gefilterte Erfassungswerte
- 107: Verlauf
- 107a: ungefilterter Verlauf
- 107b: gefilterter Verlauf

- 110: Filterung
- 120: Auswertung, Generierung der Merkmale
- 121: generierte Merkmale
- 121a: erstes generiertes Merkmal
- 121b: zweites generiertes Merkmal

- 130: Merkmalsauswertung

- 140: Zeitabhängige Analyse

- 150: Entscheidungsdurchführung
- 151: Entscheidungsergebnisses
- 151a: positives Entscheidungsergebnis
- 151b: negatives Entscheidungsergebnis
- 152: Verlaufsmuster
- 153: kritischer Punkt

- 160: Steuerung
- 161: Steuerungssignals

- 170: Plausibilisierung
- 171: Schwellenwert

- 200: Überwachungsvorrichtung

- 210: Verarbeitungsvorrichtung

- 220: Nicht-flüchtiger Datenspeicher

- t: Zeit
- M: Messgröße

## Patentansprüche

1. Verfahren (100) zum Betreiben einer Küchenmaschine (10), wobei in einem Zubereitungsbetrieb mindestens eine Bearbeitungsvorrichtung (50) der Küchenmaschine (10) zur zumindest teilweise automatischen Zubereitung von Lebensmitteln angesteuert wird, und wobei
eine Überwachungsvorrichtung (200) zumindest während des Zubereitungsbetriebs eine Ermittlung von zeitlich aufeinander folgenden Erfassungswerten (106) an der Küchenmaschine (10) durchführt, wobei die Erfassungswerte (106) für wenigstens einen Zubereitungsparameter der Küchenmaschine (10) spezifisch sind,
**dadurch gekennzeichnet,**
**dass** zumindest eine Analyseinformation in Abhängigkeit von den zeitlich aufeinander folgenden Erfassungswerten (106) bestimmt wird, und
durch eine zeitabhängige Analyse (140) eine Häufigkeitsverteilung der Analyseinformation ermittelt wird, wobei die Häufigkeitsverteilung eine Histogrammanalyse umfasst, wodurch
ein für einen Zustand der Zubereitung spezifisches Analyseergebnis bestimmt wird, wobei
in Abhängigkeit von dem Analyseergebnis mindestens ein Steuerungssignal (161) zur Beeinflussung des Zubereitungsbetriebs ausgegeben wird.

2. Verfahren (100) nach Anspruch 1,
**dadurch gekennzeichnet,**
**dass** die nachfolgenden Schritte durchgeführt werden:
a) Filtern (110) der ermittelten Erfassungswerte (106), um eine Glättung zu erzielen, bevorzugt durch einen Tiefpassfilter,
b) Generieren von wenigstens einem Merkmal (121) anhand der, insbesondere gefilterten, Erfassungswerte (106), wobei vorzugsweise eine Merkmalsauswertung (130) des wenigstens einen generierten Merkmals (121) durchgeführt wird,
c) Bestimmen der Analyseinformation anhand der generierten Merkmale (121) und/oder anhand der ermittelten, insbesondere gefilterten, Erfassungswerte (106),
d) Durchführen der zeitabhängigen Analyse (140) der Analyseinformation, sodass in Abhängigkeit von einem zeitlichen Verlauf (107) der Erfassungswerte (106) das Analyseergebnis bestimmt wird,
e) Bestimmen eines positiven oder negativen Entscheidungsergebnisses (151a, 151b) in Abhängigkeit von dem Analyseergebnis, wobei bevorzugt das positive Entscheidungsergebnis (151a) nur dann bestimmt wird, wenn das Analyseergebnis einen zukünftigen bestimmten Zustand der Zubereitung indiziert,
f) Ausgeben des Steuerungssignals (161), wenn das bestimmte Entscheidungsergebnis (151a, 151b) positiv ist.

3. Verfahren (100) nach Anspruch 1 oder 2,
**dadurch gekennzeichnet,**
**dass** die Erfassungswerte (106) und/oder die Analyseinformation zur zeitabhängigen Analyse (140) zeitlich gepuffert werden, wobei vorzugsweise die zeitabhängige Analyse (140) eine Zeitreihenanalyse umfasst, und bevorzugt die Zeitreihenanalyse und/oder die Ermittlung der Häufigkeitsverteilung echtzeitfähig durchgeführt wird.

4. Verfahren (100) nach einem der vorhergehenden Ansprüche,
**dadurch gekennzeichnet,**
**dass** die Ermittlung der Häufigkeitsverteilung anhand der ermittelten Erfassungswerte (106) und/oder eines generierten Merkmals (121) erfolgt, um bevorzugt einen Trend eines zeitlichen Verlaufs (107) der Erfassungswerte (106) zu bestimmen, welcher einen zukünftigen bestimmten Zustand der Zubereitung indiziert.

5. Verfahren (100) nach einem der vorhergehenden Ansprüche,
**dadurch gekennzeichnet,**
**dass** durch die zeitabhängige Analyse (140) die Analyseinformation derart zeitabhängig ausgewertet wird, dass ein erster Wert der Analyseinformation mit mindestens einem zweiten Wert und/oder mit allen weiteren Werten und/oder mit einer Vergleichsvorgabe der Analyseinformation und/oder Häufigkeitsverteilung verglichen wird, wobei die Werte aus wenigstens einer der folgenden Daten ermittelt werden:
- mindestens einem gefilterten Erfassungswert (106b),
- mindestens einem ungefilterten Erfassungswert (106a),
- mindestens einem aus den Erfassungswerten (106) generierten Merkmal (121) und/oder dass ein Generieren eines Merkmals (121) anhand der ermittelten Erfassungswerte (106) erfolgt, insbesondere durch stochastische Methoden und/oder zeitabhängigen Berechnungen.

6. Verfahren (100) nach einem der vorhergehenden Ansprüche,
**dadurch gekennzeichnet,**
**dass** die Erfassungswerte (106) durch eine Erfassung (105) des zumindest einen Zubereitungsparameters der Küchenmaschine (10) ermittelt werden, wobei der Zubereitungsparameter wenigstens einen der folgenden Parameter umfasst:
- eine Drehzahl der Bearbeitungsvorrichtung (50), insbesondere eines Rührwerks (51),
- ein Parameter eines Antriebs (30), insbesondere eines Motors (31) des Antriebs (30), insbesondere ein Motorsignal,
- ein Motorsignal, insbesondere ein Motorstrom, welches von einem Drehmoment des Rührwerks (51) abhängig ist,
- eine Temperatur, welche insbesondere an einem zubereiteten Lebensmittel in der Küchenmaschine (10) erfasst wird,
- ein messbarer Parameter am zubereiteten Lebensmittel, welcher insbesondere zur Zubereitung von Schlagsahne dient.

7. Verfahren (100) nach einem der vorhergehenden Ansprüche,
**dadurch gekennzeichnet,**
**dass** zur Ermittlung der Erfassungswerte (106) eine Erfassung (105), insbesondere als Messung, an einem elektrischen Bauteil der Küchenmaschine (10), insbesondere an einem Antrieb (30) der Bearbeitungsvorrichtung (50), durchgeführt wird und/oder die Erfassungswerte (106) für elektrische Parameter der Küchenmaschine (10), insbesondere für ein Motorsignal des Antriebs (30), ermittelt werden und/oder dass eine Plausibilisierung (170) anhand von mindestens einem empirisch ermittelten Schwellenwert (171) erfolgt, wobei der Schwellenwert (171) in Abhängigkeit von einem zur Zubereitung vorgesehenen Lebensmittel ausgewählt wird.

8. Verfahren (100) nach einem der vorhergehenden Ansprüche,
**dadurch gekennzeichnet,**
**dass** ein Trend und/oder eine Prädiktion der ermittelten Erfassungswerte (106) und/oder Merkmale (121), insbesondere von generierten Merkmalen (121), und/oder Häufigkeitsverteilung ermittelt wird, vorzugsweise bei einer Merkmalsauswertung (130) des Merkmals (121) und/oder bei der zeitabhängigen Analyse (140).

9. Verfahren (100) nach einem der vorhergehenden Ansprüche,
**dadurch gekennzeichnet,**
**dass** das Entscheidungsergebnis (151) nur dann positiv bestimmt wird, wenn ein vorgegebenes zeitliches Verlaufsmuster (152) detektiert wird, insbesondere ein andauernder Anstieg oder Abfall
und/oder dass das vorgegebene zeitliche Verlaufsmuster (152) in Abhängigkeit von einem zur Zubereitung vorgesehenen Lebensmittel ausgewählt wird, insbesondere anhand von einer Bedienereingabe und/oder eines mit der Küchenmaschine (10) verbundenen Datenspeichers.

10. Verfahren (100) nach einem der vorhergehenden Ansprüche,
**dadurch gekennzeichnet,**
**dass** in dem Zubereitungsbetrieb die Bearbeitungsvorrichtung (50) mit einem Rührwerk (51) zur zumindest teilweise automatischen Zubereitung von Schlagsahne angesteuert wird.

11. Küchenmaschine (10) mit mindestens einer Bearbeitungsvorrichtung (50) und einer Überwachungsvorrichtung (200), wobei
in einem Zubereitungsbetrieb die Bearbeitungsvorrichtung (50) zur zumindest teilweise automatischen Zubereitung von Lebensmitteln ansteuerbar ist, und wobei durch die Überwachungsvorrichtung (200) zumindest während des Zubereitungsbetriebs eine Ermittlung von zeitlich aufeinander folgenden Erfassungswerten (106) an der Küchenmaschine (10) durchführbar ist, wobei die Erfassungswerte (106) für wenigstens einen Zubereitungsparameter der Küchenmaschine (10) spezifisch sind,
**dadurch gekennzeichnet,**
**dass** die Überwachungsvorrichtung (200) derart ausgebildet ist, dass durch die Überwachungsvorrichtung (200) zumindest eine Analyseinformation in Abhängigkeit von den zeitlich aufeinander folgenden Erfassungswerten (106) bestimmbar ist, und
durch eine zeitabhängige Analyse (140) eine Häufigkeitsverteilung der Analyseinformation ermittelbar ist, wobei die Häufigkeitsverteilung eine Histogrammanalyse umfasst, wodurch
ein für einen Zustand der Zubereitung spezifisches Analyseergebnis bestimmbar ist, wobei
in Abhängigkeit von dem Analyseergebnis mindestens ein Steuerungssignal (161) zur Beeinflussung des Zubereitungsbetriebs ausgebbar ist.

12. Küchenmaschine nach Anspruch 11,
**dadurch gekennzeichnet,**
**dass** die Bearbeitungsvorrichtung (50) zumindest einen Antrieb (30) und ein durch den Antrieb (30) betreibbares Bearbeitungswerkzeug (51), insbesondere ein Rührwerk (51) der Küchenmaschine (10), umfasst, und insbesondere die Überwachungsvorrichtung (200) elektrisch mit dem Antrieb (30) verbunden ist.

13. Küchenmaschine nach einem der Ansprüche 11 oder 12,
**dadurch gekennzeichnet,**
**dass** die Bearbeitungsvorrichtung (50) und/oder die Überwachungsvorrichtung (200) in der Küchenmaschine (10) integriert ist, und insbesondere die Erfassung (105) zur Ermittlung der Erfassungswerte (106) direkt an der Bearbeitungsvorrichtung (50) innerhalb Küchenmaschine (10) erfolgt.

14. Küchenmaschine nach einem der Ansprüche 11 bis 13,
**dadurch gekennzeichnet,**
**dass** die Küchenmaschine (10) dazu ausgeführt ist, ein
Verfahren (100) nach einem der Ansprüche 1 bis 10 durchzuführen.

15. Computerprogrammprodukt, umfassend Befehle, die bewirken, dass die Küchenmaschine (10) nach einem der Ansprüche 11 bis 14 die Verfahrensschritte nach einem der Ansprüche 1 bis 10 ausführt.

## Claims

1. Method (100) for operating a food processor (10), wherein in a preparation mode at least one processing device (50) of the food processor (10) is controlled for at least partially automatic preparation of food, and wherein
a monitoring device (200) carries out, at least during the preparation mode, a determination of temporally successive detection values (106) at the food processor (10), the detection values (106) being specific for at least one preparation parameter of the food processor (10),
**characterized in that**
at least one item of analysis information is determined as a function of the temporally successive detection values (106), and
a frequency distribution of the item of analysis information is determined by a time-dependent analysis (140), the frequency distribution comprising a histogram analysis, whereby
an analysis result specific to a state of the preparation is determined, wherein
at least one control signal (161) for influencing the preparation mode is output as a function of the analysis result.

2. The method (100) according to claim 1,
**characterized in that**
the following steps are carried out:
(a) filtering (110) the detected detection values (106) to achieve smoothing, preferably by a low-pass filter,
b) generating at least one feature (121) on the basis of the, in particular filtered, detection values (106), wherein a feature evaluation (130) of the at least one generated feature (121) is preferably carried out,
c) Determining the item of analysis information on the basis of the generated features (121) and/or on the basis of the determined, in particular filtered, detection values (106),
d) performing the time-dependent analysis (140) of the item of analysis information so that, depending on a time course (107) of the detection values (106), the analysis result is determined,
e) determining a positive or negative decision result (151a, 151b) as a function of the analysis result, preferably determining the positive decision result (151a) only when the analysis result indicates a future particular condition of the preparation,
f) outputting the control signal (161) when the certain decision result (151a, 151b) is positive.

3. Method (100) according to claim 1 or 2,
**characterized in that**
the detection values (106) and/or the item of analysis information for the time-dependent analysis (140) are time-buffered, the time-dependent analysis (140) preferably comprising a time series analysis, and preferably the time series analysis and/or the determination of the frequency distribution being carried out in real time.

4. Method (100) according to any one of the preceding claims,
**characterized in that**
the determination of the frequency distribution is carried out on the basis of the determined detection values (106) and/or a generated feature (121), in order preferably to determine a trend of a temporal course (107) of the detection values (106), which trend indicates a future specific state of the preparation.

5. Method (100) according to any one of the preceding claims,
**characterized in that**
the time-dependent analysis (140) evaluates the item of analysis information in a time-dependent manner such that a first value of the item of analysis information is compared with at least one second value and/or with all further values and/or with a comparison specification of the item of analysis information and/or frequency distribution, the values being determined from at least one of the following data:
- at least one filtered detection value (106b),
- at least one unfiltered detection value (106a),
- at least one feature (121) generated from the detection values (106) and/or **in that** a feature (121) is generated on the basis of the determined detection values (106), in particular by stochastic methods and/or time-dependent calculations.

6. Method (100) according to any one of the preceding claims,
**characterized in that**
the detection values (106) are determined by a detection (105) of the at least one preparation parameter of the food processor (10), wherein the preparation parameter comprises at least one of the following parameters:
- a rotational speed of the processing device (50), in particular of an agitator (51),
- a parameter of a drive (30), in particular a motor (31) of the drive (30), in particular a motor signal,
- a motor signal, in particular a motor current, which is dependent on a torque of the agitator (51),
- a temperature, which is detected in particular at a prepared food in the food processor (10),
- a measurable parameter on the prepared food, which is used in particular for the preparation of whipped cream.

7. Method (100) according to any one of the preceding claims,
**characterized in that**
in order to determine the detection values (106), a detection (105), in particular as a measurement, is carried out on an electrical component of the food processor (10), in particular on a drive (30) of the processing device (50), and/or the detection values (106) for electrical parameters of the food processor (10), in particular for a motor signal of the drive (30), are determined
and/or **in that** a plausibility check (170) is carried out on the basis of at least one empirically determined threshold value (171), the threshold value (171) being selected as a function of a foodstuff intended for preparation.

8. Method (100) according to any one of the preceding claims,
**characterized in that**
a trend and/or a prediction of the determined detection values (106) and/or features (121), in particular of generated features (121), and/or frequency distribution is determined, preferably during a feature evaluation (130) of the feature (121) and/or during the time-dependent analysis (140).

9. Method (100) according to any one of the preceding claims,
**characterized in that**
the decision result (151) is positively determined only if a predetermined temporal progression pattern (152) is detected, in particular a continuous rise or fall and/or **in that** the predetermined temporal progression pattern (152) is selected as a function of a foodstuff intended for preparation, in particular on the basis of an operator input and/or a data memory connected to the food processor (10).

10. Method (100) according to any one of the preceding claims,
**characterized in that**
in the preparation mode, the processing device (50) is controlled by an agitator (51) for at least partially automatic preparation of whipped cream.

11. Food processor (10) with at least one processing device (50) and a monitoring device (200), wherein
in a preparation mode, the processing device (50) being controllable for at least partially automatic preparation of food, and wherein
by means of the monitoring device (200), at least during the preparation mode, a determination of temporally successive detection values (106) can be carried out on the food processor (10), the detection values (106) being specific for at least one preparation parameter of the food processor (10),
**characterized in that**
the monitoring device (200) is designed in such a way that at least one item of analysis information can be determined by the monitoring device (200) as a function of the temporally successive detection values (106), and
a frequency distribution of the item of analysis information can be determined by a time-dependent analysis (140), the frequency distribution comprising a histogram analysis, wherein
an analysis result specific to a state of the preparation can be determined, wherein at least one control signal (161) for influencing the preparation operation can be output as a function of the analysis result.

12. Food processor (10) according to claim 11,
**characterized in that**
the processing device (50) comprises at least one drive (30) and a processing tool (51) which can be operated by the drive (30), in particular an agitator (51) of the food processor (10), and in particular the monitoring device (200) is electrically connected to the drive (30).

13. Food processor (10) according to any one of claims 11 or 12,
**characterized in that**
the processing device (50) and/or the monitoring device (200) is integrated in the kitchen machine (10), and in particular the detection (105) for determining the detection values (106) takes place directly on the processing device (50) within the kitchen machine (10).

14. Food processor (10) according to any one of claims 11 to 13,
**characterized in that**
the food processor (10) is adapted to perform a method (100) according to any one of the preceding claims.

15. A computer program product comprising instructions for causing the food processor (10), in particular according to any one of the preceding claims,
carries out the process steps according to any one of claims 1 to 10.

## Revendications

1. Procédé (100) pour faire fonctionner un robot ménager (10), dans lequel, dans un mode de préparation, au moins un dispositif de traitement (50) du robot ménager (10) est commandé pour la préparation au moins partiellement automatique d'aliments, et dans lequel
un dispositif de surveillance (200) effectue, au moins pendant le mode de préparation, une détermination de valeurs de détection (106) successives dans le temps sur le robot ménager (10), les valeurs de détection (106) étant spécifiques à au moins un paramètre de préparation du robot ménager (10),
**caractérisé en ce qu'**
au moins une information d'analyse est déterminée en fonction des valeurs de détection (106) qui se succèdent dans le temps, et
une distribution de fréquence des informations d'analyse est déterminée par une analyse dépendant du temps (140), la distribution de fréquence comprenant une analyse d'histogramme, moyennant quoi
un résultat d'analyse spécifique à un état de la préparation est déterminé, où en fonction du résultat d'analyse, au moins un signal de commande (161) est émis pour influencer le mode de préparation.

2. Procédé (100) selon la revendication 1,
**caractérisé en ce que**
les étapes suivantes soient effectuées :
a) le filtrage (110) des valeurs de détection déterminées (106) afin d'obtenir un lissage, de préférence par un filtre passe-bas,
b) génération d'au moins une caractéristique (121) à l'aide des valeurs de détection (106), en particulier filtrées, une évaluation de caractéristique (130) de l'au moins une caractéristique générée (121) étant de préférence effectuée,
c) déterminer l'information d'analyse à l'aide des caractéristiques générées (121) et/ou à l'aide des valeurs de détection déterminées (106), en particulier filtrées,
d) effectuer l'analyse dépendant du temps (140) en fonction de l'information d'analyse, de sorte que le résultat d'analyse est déterminé en fonction d'une évolution (107) dans le temps des valeurs de détection (106),
e) détermination d'un résultat de décision positif ou négatif (151a, 151b) en fonction du résultat d'analyse, de préférence le résultat de décision positif (151a) n'étant déterminé que si le résultat d'analyse indique un état futur déterminé de la préparation,
f) émettre le signal de commande (161) lorsque le résultat de décision déterminé (151a, 151b) est positif.

3. Procédé (100) selon la revendication 1 ou 2,
**caractérisé en ce que**
les valeurs de détection (106) et/ou l'information d'analyse pour l'analyse dépendant du temps (140) sont mises en mémoire tampon dans le temps, l'analyse dépendant du temps (140) comprenant de préférence une analyse de séries temporelles, et de préférence l'analyse de séries temporelles et/ou la détermination de la distribution de fréquence étant effectuées en temps réel.

4. Procédé (100) selon l'une quelconque des revendications précédentes,
**caractérisé en ce que**
la détermination de la distribution de fréquence s'effectue à l'aide des valeurs de détection (106) déterminées et/ou d'une caractéristique (121) générée, afin de déterminer de préférence une tendance d'une évolution (107) dans le temps des valeurs de détection (106), laquelle indique un état futur déterminé de la préparation.

5. Procédé (100) selon l'une quelconque des revendications précédentes,
**caractérisé en ce que**
grâce à l'analyse dépendant du temps (140), l'information d'analyse est évaluée en fonction du temps de telle sorte qu'une première valeur de l'information d'analyse est comparée à au moins une deuxième valeur et/ou à toutes les autres valeurs et/ou à une consigne de comparaison de l'information d'analyse et/ou à une distribution de fréquence, les valeurs étant déterminées à partir d'au moins une des données suivantes:
- au moins une valeur de détection filtrée (106b),
- au moins une valeur de détection non filtrée (106a),
- au moins une caractéristique (121) générée à partir des valeurs de détection (106) et/ou **en ce qu'**une génération d'une caractéristique (121) est effectuée à l'aide des valeurs de détection (106) déterminées, en particulier par des méthodes stochastiques et/ou des calculs dépendant du temps.

6. Procédé (100) selon l'une quelconque des revendications précédentes,
**caractérisé en ce que**
les valeurs de détection (106) sont déterminées par une détection (105) de l'au moins un paramètre de préparation du robot ménager (10), le paramètre de préparation comprenant au moins l'un des paramètres suivants :
- une vitesse de rotation du dispositif de traitement (50), en particulier d'un agitateur (51),
- un paramètre d'un entraînement (30), en particulier d'un moteur (31) de l'entraînement (30), en particulier un signal de moteur,
- un signal de moteur, en particulier un courant de moteur, qui dépend d'un couple de l'agitateur (51),
- une température, qui est notamment détectée sur un aliment préparé dans le robot ménager (10),
- un paramètre mesurable sur l'aliment préparé, qui sert notamment à la préparation de la crème fouettée.

7. Procédé (100) selon l'une quelconque des revendications précédentes,
**caractérisé en ce que**
pour déterminer les valeurs de détection (106), on effectue une détection (105), notamment sous forme de mesure, sur un composant électrique du robot ménager (10), notamment sur un entraînement (30) du dispositif de traitement (50), et/ou on détermine les valeurs de détection (106) pour des paramètres électriques du robot ménager (10), notamment pour un signal de moteur de l'entraînement (30)
et/ou **en ce qu'**une plausibilisation (170) est effectuée à l'aide d'au moins une valeur seuil (171) déterminée empiriquement, la valeur seuil (171) étant sélectionnée en fonction d'un aliment prévu pour la préparation.

8. Procédé (100) selon l'une quelconque des revendications précédentes,
**caractérisé en ce qu'**
une tendance et/ou une prédiction des valeurs de détection (106) et/ou des caractéristiques (121) déterminées, en particulier des caractéristiques générées (121), et/ou de la distribution de fréquence est déterminée, de préférence lors d'une évaluation de caractéristique (130) de la caractéristique (121) et/ou lors de l'analyse en fonction du temps (140).

9. Procédé (100) selon l'une quelconque des revendications précédentes,
**caractérisé en ce que**
le résultat de décision (151) n'est déterminé positivement que si un modèle de déroulement temporel (152) prédéfini est détecté, notamment une augmentation ou une diminution continue
et/ou **en ce que** le modèle de déroulement temporel (152) prédéfini est sélectionné en fonction d'un aliment prévu pour la préparation, en particulier à l'aide d'une entrée de l'utilisateur et/ou d'une mémoire de données reliée au robot ménager (10).

10. Procédé (100) selon l'une quelconque des revendications précédentes,
**caractérisé en ce que**
dans le mode de préparation, le dispositif de traitement (50) est commandé par un agitateur (51) pour la préparation au moins partiellement automatique de crème fouettée.

11. Robot ménager (10) avec au moins un dispositif de traitement (50) et un dispositif de surveillance (200), dans lequel
dans un mode de préparation, le dispositif de traitement (50) peut être commandé pour la préparation au moins partiellement automatique d'aliments, et dans lequel le dispositif de surveillance (200) permet d'effectuer, au moins pendant le mode de préparation, une détermination de valeurs de détection (106) successives dans le temps sur le robot ménager (10), les valeurs de détection (106) étant spécifiques à au moins un paramètre de préparation du robot ménager (10),
**caractérisé en ce que**
le dispositif de surveillance (200) est conçu de telle sorte qu'au moins une information d'analyse peut être déterminée par le dispositif de surveillance (200) en fonction des valeurs de détection (106) qui se succèdent dans le temps, et
une distribution de fréquence de l'information d'analyse peut être déterminée par une analyse dépendant du temps (140), la distribution de fréquence comprenant une analyse d'histogramme, ce qui fait que
un résultat d'analyse spécifique à un état de la préparation peut être déterminé, où en fonction du résultat d'analyse, au moins un signal de commande (161) peut être émis pour influencer le mode de préparation.

12. Robot ménager (10) selon la revendication 11,
**caractérisé en ce que**
le dispositif de traitement (50) comprend au moins un entraînement (30) et un outil de traitement (51) pouvant être actionné par l'entraînement (30), en particulier un agitateur (51) du robot ménager (10), et en particulier le dispositif de surveillance (200) est relié électriquement à l'entraînement (30).

13. Robot ménager (10) selon l'une des revendications 11 ou 12,
**caractérisé en ce que**
le dispositif de traitement (50) et/ou le dispositif de surveillance (200) est intégré dans le robot ménager (10), et en particulier la détection (105) pour déterminer les valeurs de détection (106) est effectuée directement sur le dispositif de traitement (50) à l'intérieur du robot ménager (10).

14. Robot ménager (10) selon l'une quelconque des revendications 11 à 13,
**caractérisé en ce que**
le robot ménager (10) est adapté pour mettre en oeuvre un procédé (100) selon l'une des revendications précédentes.

15. Produit programme d'ordinateur comprenant des instructions qui font que le robot ménager (10), notamment selon l'une quelconque des revendications précédentes, exécute les étapes de procédé selon l'une quelconque des revendications 1 à 10.
